# EUROPEAN PATENT SPECIFICATION

(11) **EP 3 499 844 B1**
(45) Date of publication and mention of the grant of the patent: **27.10.2021**
(21) Application number: 17838696.7
(22) Date of filing: 08.08.2017
(51) Int. Cl.: H04L 29/08, H04L 29/06, A63F 13/52, A63F 13/35, A63F 13/45

(54) **METHOD FOR SYNCHRONISING MOVEMENT OF VIRTUAL OBJECT, CLIENT, SERVER AND STORAGE MEDIUM**
VERFAHREN ZUR SYNCHRONISIERUNG DER BEWEGUNG EINES VIRTUELLEN OBJEKTS, CLIENT, SERVER UND SPEICHERMEDIUM
PROCÉDÉ DE SYNCHRONISATION DU MOUVEMENT D'UN OBJET VIRTUEL, CLIENT, SERVEUR, ET SUPPORT DE STOCKAGE

(30) Priority: 08.08.2016 CN 201610643328
(43) Date of publication of application: 19.06.2019
(73) Proprietor: Tencent Technology (Shenzhen) Company Limited, Shenzhen, Guangdong 518057 (CN)
(72) Inventor: WU, Yifan, Shenzhen Guangdong 518057 (CN); LIU, Lei, Shenzhen Guangdong 518057 (CN); HE, Chao, Shenzhen Guangdong 518057 (CN)
(74) Representative: Eisenführ Speiser
(86) International application number: PCT/CN2017/096436
(87) International publication number: WO 2018/028566

(56) References cited:
- CN-A- 1 941 788
- CN-A- 102 769 616
- CN-A- 103 701 918
- CN-A- 104 954 349
- CN-A- 106 302 679
- JP-A- H10 272 256
- LI ET AL: "GameOD: An Internet Based Game-On-Demand Framework", ACM SYMPOSIUM ON VIRTUAL REALITY SOFTWARE AND TECHNOLOGY, ACM, US, 10 November 2004 (2004-11-10), pages 129-136, XP002658451, DOI: 10.1145/1077534.1077559 ISBN: 978-1-58113-907-5
- FREDERICK W. B. LI ET AL: "Game-on-demand: : An online game engine based on geometry streaming", ACM TRANSACTIONS ON MULTIMEDIA COMPUTING COMMUNICATIONS ANDAPPLICATIONS, vol. 7, no. 3, 1 August 2011 (2011-08-01), pages 1-22, XP055650356, US ISSN: 1551-6857, DOI: 10.1145/2000486.2000493
- YUSEN LI ET AL: "Consistency Aware Dead Reckoning Threshold Tuning with Server Assistance in Client-Server-Based DVEs", COMPUTER AND INFORMATION TECHNOLOGY (CIT), 2010 IEEE 10TH INTERNATIONAL CONFERENCE ON, IEEE, PISCATAWAY, NJ, USA, 29 June 2010 (2010-06-29), pages 2925-2932, XP031758088, ISBN: 978-1-4244-7547-6

## Description

This application claims the priority to Chinese Patent Application No. 201610643328.4, entitled "METHOD FOR SYNCHRONISING MOVEMENT OF VIRTUAL OBJECT, CLIENT, SERVER AND STORAGE MEDIUM" filed on August 8, 2016 with the Chinese Patent Office.

### FIELD OF THE TECHNOLOGY

The present disclosure relates to the field of data processing technologies, and specifically to a method and a system for synchronizing movement of a virtual object.

### BACKGROUND OF THE DISCLOSURE

Synchronizing movement of a virtual object means that a moving state of the virtual object controlled in a client needs to be consistent with a moving state of the virtual object controlled in a server. That is, updating of the moving state of the virtual object by the client needs to be consistent with updating of the moving state of the virtual object by the server. The virtual object is usually applied in a virtual scenario, such as a game or a simulation. Using a game scenario as an example, the virtual object is, for example, a game character controlled by a game user, or a logical object (for example, a monster) in a game. If a user performs a movement control operation for a game object on a game client side, and controls the game object to run forward, the game client and a game server need to synchronously control the game object to run forward, so that moving control of a game object by the game client is consistent with moving control of the same game object by the game server.

The synchronizing movement of a virtual object is essential for maintaining consistent processing of movement data of the virtual object by a client and by a server and for maintaining stable operation of a virtual scenario such as a game or a simulation. In Frederick W.B. Li et al., "GameOD: An Internet Based Game-On-Demand Framework", ACM SYMPOSIUM ON VIRTUAL REALITY SOFTWARE AND TECHNOLOGY, ACM, USA, 10 November 2004, pages 129-136, it is disclosed that multiplayer online 3D games are becoming very popular in recent years. However, existing games require the complete game content to be installed prior to game playing. Since the content is usually large in size, it may be difficult to run these games on a PDA or other handheld devices. It also pushes game companies to distribute their games as CDROMs/DVDROMs rather than online downloading. On the other hand, due to network latency, players may perceive discrepant status of some dynamic game objects. In this paper, the authors present a game-on-demand (Game OD) framework to distribute game content progressively in an on-demand manner.
In Frederick W.B. Li et al., "Game-on-demand: An online game engine based on geometry streaming", ACM TRANSACTIONS ON MULTIMEDIA COMPUTING COMMUNICAITONS AND APPLICATIONS, Vol.7, No.3, 1 August 2011, pages 1-22, it is disclosed that in recent years, online gaming becomes very popular. In contrast to stand-alone games, online games tend to be large-scale and typically support interactions among users. However, due to the high network latency of the Internet, smooth interactions among the users are often difficult. The huge and dynamic geometry data sets also make it difficult for some machines, such as handheld devices, to run those games. These constraints have stimulated some research interests on online gaming, which may be broadly categorized into two areas; technological support and user perceived visual quality. Technological support concerns the performance issues while user-perceived visual quality concerns the presentation quality and accuracy of the game. In this article, the authors propose a game-on-demand engine that addresses both research areas.
In Yusen Li and Wentong Cai, "Consistency Aware Dead Reckoning Threshold Tuning with Server Assistance in Clinet-Server-Based DVEs", IEEE 10TH INTERNATIONAL CONFERENCE ON COMPUTER AND INFORMATION TECHNOLOGY (CIT), IEEE, PISCATAWAY, NJ, USA, 29 June 2010, pages 2925-2932, it is disclosed that in distributed virtual environments (DVEs), maintaining a consistent view of the virtual world among all uers is a primary task. Due to the resource limitations such as network capacity and computational power, the consistency of the virtual world cannot be guaranteed sometimes. In this paper, the authors try to address this problem in client-server-based DVEs by considering server side network capacity limitation.

### SUMMARY

Embodiments of the present disclosure provide a method and a system for synchronizing movement of a virtual object.

A method for synchronizing movement of a virtual object that is performed by a client and a server is provided. The method includes:
detecting a first system accumulation time since a previous speed update of a virtual object, and a second system accumulation time since a previous location update of the virtual object;
updating a speed of the virtual object when the first system accumulation time reaches a preset speed update time, and updating a location of the virtual object when the second system accumulation time reaches a preset location update time,
the preset speed update time being greater than the preset location update time, the first system accumulation time being recalculated each time after the client updates the speed of the virtual object, and the second system accumulation time being recalculated each time after the client updates the location of the virtual object;
detecting, by the server, a system accumulation time since a previous speed and location update of the virtual object; and
updating, by the server, a speed and a location of the virtual object when it is detected that the system accumulation time reaches a preset update time, the system accumulation time being recalculated each time after the server updates the speed and the location of the virtual object,
the speed of the virtual object being updated by the client and the server at a low frequency, the location of the virtual object being updated by the server at the same low frequency, and the location of the virtual object being updated by the client at a high frequency.

A system for synchronizing movement of a virtual object, including a client and a server is further provided. The client includes a first detection module and a first update module.

The first detection module is configured to detect a first system accumulation time since a previous speed update of a virtual object, and a second system accumulation time since a previous location update of the virtual object.

The first update module is configured to update a speed of the virtual object when the first system accumulation time reaches a preset speed update time, and update a location of the virtual object when the second system accumulation time reaches a preset location update time.

The preset speed update time is greater than the preset location update time, the first system accumulation time is recalculated each time after the client updates the speed of the virtual object, and the second system accumulation time is recalculated each time after the client updates the location of the virtual object.

The server includes a second detection module and a second update module.

The second detection module is configured to detect a system accumulation time since a previous speed and location update of the virtual object.

The second update module is configured to update a speed and a location of the virtual object when it is detected that the system accumulation time reaches a preset update time, the system accumulation time being recalculated each time after the server updates the speed and the location of the virtual object.

The speed of the virtual object is updated by the client and the server at a low frequency, the location of the virtual object is updated by the server at the same low frequency, and the location of the virtual object is updated by the client at a high frequency.

According to the embodiments of the present disclosure, for different update requirements on the speed and the location of the virtual object, the updating is performed at different frequencies. That is, the speed of the virtual object is updated by the client and the server at a low frequency, the location of the virtual object is updated by the server at the same low frequency, and the location of the virtual object is updated by the client at a high frequency, so that the speed and location update of the virtual object satisfies an actual operating requirement of a virtual scenario, thereby achieving a movement synchronization effect with a high accuracy. Moreover, since both the speed and the location are updated by the server at the low frequency, performance overhead of the server is greatly reduced. It may be learned that, according to the embodiments of the present disclosure, the performance overhead of the server can be reduced while ensuring the movement synchronization effect with the high accuracy.

### BRIEF DESCRIPTION OF THE DRAWINGS

The drawings to be used in the description of the embodiments of the disclosure or the conventional technology will be described briefly as follows, so that the technical solutions according to the embodiments of the present disclosure or according to the conventional technology will become clearer. It is apparent that the drawings in the following description only illustrate some embodiments of the present disclosure. For those skilled in the art, other drawings may be obtained according to these drawings without any creative work.
FIG. 1 is a block diagram showing a structure of a system for synchronizing movement of a virtual object according to an embodiment of the present disclosure;
FIG. 2 is a signaling flowchart of a method for synchronizing movement of a virtual object according to an embodiment of the present disclosure;
FIG. 3 is signaling flowchart of a method for synchronizing movement of a virtual object according to another embodiment of the present disclosure;
FIG. 4 is a flowchart of a method for synchronizing movement of a virtual object according to an embodiment of the present disclosure;
FIG. 5 is a flowchart of a method for synchronizing movement of a virtual object according to another embodiment of the present disclosure;
FIG. 6 is a flowchart of a method for synchronizing movement of a virtual object according to another embodiment of the present disclosure;
FIG. 7 is a flowchart of a method for synchronizing movement of a virtual object according to another embodiment of the present disclosure;
FIG. 8 is a flowchart of a method for synchronizing movement of a virtual object according to another embodiment of the present disclosure;
FIG. 9 is a flowchart of a method for synchronizing movement of a virtual object according to another embodiment of the present disclosure;
FIG. 10 is a flowchart of a method for synchronizing movement of a virtual object according to another embodiment of the present disclosure;
FIG. 11 is a schematic diagram showing timelines of movement update performed by a client and by a server according to an embodiment of the present disclosure;
FIG. 12 is a schematic diagram of components of a game client and a game server according to an embodiment of the present disclosure;
FIG. 13 shows a solution for synchronizing movement which is simulated based on 2D grids in the conventional technology;
FIG. 14 is a schematic diagram showing interaction of a scenario editor with a game client and a game server according to an embodiment of the present disclosure;
FIG. 15 is a schematic diagram showing physical collision data of a static object in a 3D scenario according to an embodiment of the present disclosure;
FIG. 16 is a schematic diagram showing physical collision data of a dynamic object in a 3D scenario according to an embodiment of the present disclosure;
FIG. 17 is a schematic diagram showing terrain walking layer data in a 3D scenario according to an embodiment of the present disclosure;
FIG. 18 is a schematic diagram of a movement model based on a character controller according to an embodiment of the present disclosure;
FIG. 19 is a schematic diagram of a movement model of an infantryman according to an embodiment of the present disclosure;
FIG. 20 is a schematic diagram of a movement model of a rider according to an embodiment of the present disclosure;
FIG. 21 is a schematic diagram showing an angular speed simulated by using a linear speed according to an embodiment of the present disclosure;
FIG. 22 is a schematic diagram showing a variable circular motion according to an embodiment of the present disclosure;
FIG. 23 is a schematic diagram showing timelines of movement update performed by a client and by a server according to an embodiment of the present disclosure;
FIG. 24 is a schematic diagram of a game effect according to an embodiment of the present disclosure;
FIG. 25 is a block diagram showing a structure of a client according to an embodiment of the present disclosure;
FIG. 26 is a block diagram showing a hardware structure of a terminal device according to an embodiment of the present disclosure; and
FIG. 27 is a block diagram showing a structure of a server according to an embodiment of the present disclosure.

### DESCRIPTION OF EMBODIMENTS

Technical solutions according to embodiments of the present disclosure are described clearly and completely hereinafter in conjunction with drawings used in the embodiments of the present disclosure. Apparently, the described embodiments are only some embodiments of the present disclosure rather than all the embodiments. Any other embodiments obtained by those skilled in the art based on the embodiments of the present disclosure without any creative work may fall in the scope of protection of the present disclosure.

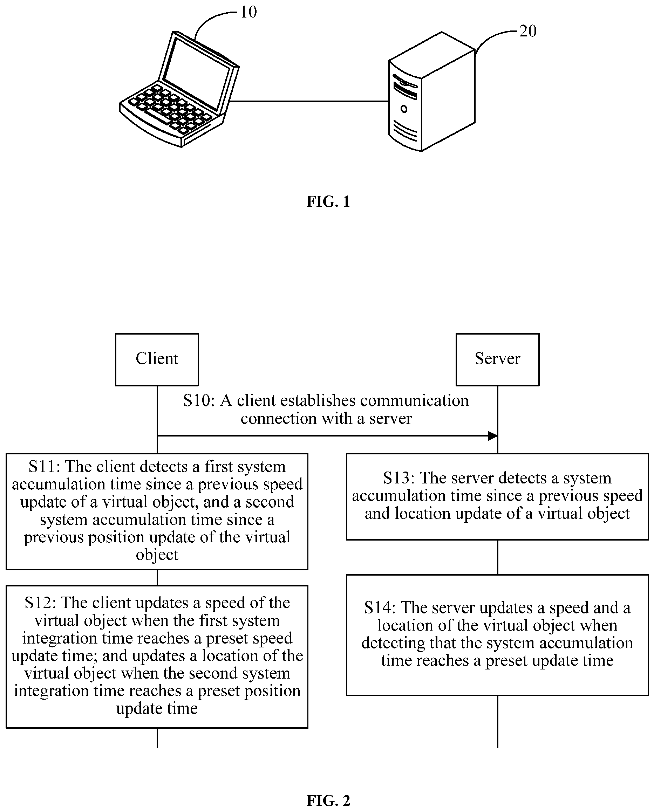

FIG. 1 is a block diagram showing a structure of a system for synchronizing movement of a virtual object according to an embodiment of the present disclosure. Referring to FIG. 1, the system for synchronizing movement of a virtual object includes a client 10 and a server 20. Using a virtual game scenario as an example, the client 10 may be a game client, and the server 20 may be a game server. Using a virtual simulation scenario as an example, the client 10 may be a simulation client, and the server 20 may be a simulation server.

The client 10 may be a client that is provided on a terminal device for providing local services for a virtual scenario such as a network game.

The server 20 may be a server on a network side for providing network services for a virtual scenario such as a network game. The server may be implemented by using a single server, or may be implemented by using a server group including multiple servers.

In this embodiment of the present disclosure, movement synchronization of a virtual object includes speed synchronization of the virtual object and location synchronization of the virtual object. The client needs to separately update a speed and a location of the virtual object, and the server needs to separately update the speed and the location of the virtual object. Moreover, the speed of the virtual object updated by the client needs to be consistent with the speed of the virtual object updated by the server, and the location of the virtual object updated by the client needs to be consistent with the location of the virtual object updated by the server.

A frequency at which the speed of the virtual object is updated by the client may be a frequency at which the speed of the virtual object is updated by the server. The speed of the virtual object is updated at a low frequency. Since the speed of the virtual object continuously follows a speed change trend when there is no user interference, in this embodiment of the present disclosure, the speed of the virtual object may be updated at a low frequency. Moreover, considering performance overhead of the server, the speed of the virtual object may be updated by the client at the same frequency as that used by the server. For example, the client and the server agree on a frequency for updating the speed of the virtual object, and the client updates the speed of the virtual object at the agreed frequency.

When the location of the virtual object is updated, to ensure processing smoothness of the client, the client may update the location of the virtual object at a high frequency. However, considering the performance overhead of the server, the server may update the location of the virtual object at a low frequency that is the same as the frequency for updating the speed.

In this embodiment of the present disclosure, the movement synchronization of the virtual object includes the speed synchronization of the virtual object and the location synchronization of the virtual object. The client and the server are allowed to update the speed and the location of the virtual object at different update frequencies. The speed is updated at the frequency which is consistent with settings of the server. The speed is updated at a low frequency. Moreover, the client updates the location at a high frequency, and the server updates the location at a same low frequency. For different update requirements on the speed and the location of the virtual object, in this embodiment of the present disclosure, the speed and the location are updated at different frequencies, so that the speed and location updates of the virtual object meet an operation requirement of an actual virtual scenario, to obtain a movement synchronization effect with a relatively high accuracy. Moreover, the server updates both the speed and the location at the low frequency, thereby greatly reducing the performance overhead of the server.

Based on the system for synchronizing movement of a virtual object shown in FIG. 1, FIG. 2 is a signaling flowchart of a method for synchronizing movement of a virtual object according to an embodiment of the present disclosure. Referring to FIG. 2, the procedure may include the following steps S10 to S14.

In step S10, a client establishes communication connection with a server.

The client may initiate a network game, a simulation application, or the like, to upload a virtual scenario, and establish communication connection with the server.

In step S11, the client detects a first system accumulation time since a previous speed update of a virtual object, and a second system accumulation time since a previous location update of the virtual object.

Using a game scenario as an example, the virtual object may be a game character controlled by the client, or may be another game character or a logic object in the game scenario currently displayed by the client. Using a virtual simulation scenario as an example, the virtual object may be a simulation object (a simulation object such as a motional person or animal) controlled by the client.

The previous speed update of the virtual object in the client is a most recent speed update of the virtual object. The most recent speed update of the virtual object may be a speed update performed at a low frequency by using the procedure shown in FIG. 2. Alternatively, the most recent speed update of the virtual object may be a speed update performed by the client based on a movement update synchronization packet from the server.

The previous location update of the virtual object is a most recent location update of the virtual object. The most recent location update of the virtual object may be a location update performed at a high frequency by using the procedure shown in FIG. 2. Alternatively, the most recent location update of the virtual object may be a location update performed by the client based on a movement control operation of a user or the movement update synchronization packet from the server.

In an implementation, the first system accumulation time may be recalculated each time after the client updates a speed of the virtual object, and the second system accumulation time may be recalculated each time after the client updates a location of the virtual object. The accumulation time may be recalculated from zero or from a preset time value.

In step S12, the client updates the speed of the virtual object when the first system accumulation time reaches a preset speed update time, and updates the location of the virtual object when the second system accumulation time reaches a preset location update time.

In an implementation, the preset speed update time may be a frequency time corresponding to a set low frequency, and the preset location update time may be a frequency time corresponding to a set high frequency. The preset speed update time and the preset location update time may be set according to performance of a the terminal device on which the client is located and a requirement of a user on a virtual scenario, as long as the preset speed update time is greater than the preset location update time. That is, the client may update the speed of the virtual object at a relatively large time interval, and update the location of the virtual object at a relatively small time interval.

The client may update the speed of the virtual object each time when the first system accumulation time reaches the preset speed update time, such that the speed of the virtual object is updated at a low frequency. The client may update the location of the virtual object each time when the second system accumulation time reaches the preset location update time, such that the location of the virtual object is updated at a high frequency.

In this embodiment of the present disclosure, the client may detect the first system accumulation time and the second system accumulation time in real time or at regular intervals, update the speed each time when detecting that the first accumulation time reaches the preset speed update time, and updates the location each time when detecting that the second system accumulation time reaches the preset location update time. Moreover, the client recalculates the first system accumulation time each time after the speed is updated, and recalculates the second system accumulation time each time after the location is updated.

In an implementation, the client may detect the first system accumulation time and the second system accumulation time at an interval of a logic calculation time unit (tick, which is a core timing unit of an operating system, and one tick represents a logic calculation time unit).

In step S13, the server detects a system accumulation time since a previous speed update and a previous location update of the virtual object.

The server updates the speed and the location of the virtual object at the same low frequency, so that the server can simultaneously update the speed and the location of the virtual object. In this embodiment of the present disclosure, the system accumulation time since the previous speed and location updates of the virtual object is simultaneously detected.

The previous speed and location update of the virtual object in the server may be the most recent speed and location update of the virtual object. The most recent speed and location update of the virtual object may be performed at a low frequency by using a procedure shown in FIG. 2, or may be speed and location update performed by the server based on a movement control operation of a user, or speed and location update performed by the server based on switch of a moving state of the virtual object in a virtual scenario. The switch of the moving state of the virtual object may be, for example, a case where the speed of the virtual object is suddenly reduced to zero when the virtual object collides with an obstacle during movement, or the virtual object suddenly drops down from a height.

In this embodiment of the present disclosure, the system accumulation time may be recalculated each time after the server updates the speed and the location of the virtual object, for example, from zero or from a preset time value.

In step S14, the server updates the speed and the location of the virtual object when detecting that the system accumulation time reaches a preset update time.

The preset update time may be the same as the preset speed update time set by the client, so that the client and the server updates the speed at the same low frequency. Moreover, the server updates the location at the same low frequency, such that performance overhead of the server can be reduced, and the speed of the virtual object is synchronously updated by the client and the server. Further, the client updates the location at a high frequency, to ensure processing smoothness of the client.

In this embodiment of the present disclosure, the server may detect the system accumulation time in real time or at regular intervals, update the speed and the location each time when detecting that the system accumulation time reaches the preset update time, and recalculate the system accumulation time each time after the speed and the location are updated. In an implementation, the server may detect the system accumulation time at an interval of a tick.

In the procedure shown in FIG. 2, there may be no obvious sequential order between steps S11 and S12, and between steps S13 and S14. After the virtual scenario, such as a network game, is initiated, the client and the server may separately update the speed and the location of the location according to steps S11 and S12, and steps S13 and S14.

According to this embodiment of the present disclosure, for different update requirements on the speed and the location of the virtual object, update is performed at different frequencies. That is, the speed of the virtual object is updated by the client and the server at a low frequency, the location of the virtual object is updated by the server at the same low frequency, and the location of the virtual object is updated by the client at a high frequency, so that the speed and location update of the virtual object satisfies an actual operating requirement of the virtual scenario, thereby achieving a synchronized movement effect with a relatively high accuracy. Moreover, the server updates the speed and the location both at the low frequency, thereby greatly reducing the performance overhead of the server. As can be seen, according to this embodiment of the present disclosure, the performance overhead of the server may be reduced while ensuring the synchronized movement effect with the relatively high accuracy.

The location update of the virtual object by the client may be triggered based on the movement control operation of the user, or the speed update of the virtual object may be triggered based on the movement update synchronization packet sent by the server.

Correspondingly, after detecting the movement control operation of the user and determining a movement control parameter of the virtual object that is indicated by the movement control operation, the client may update the location of the virtual object based on a current speed of the virtual object according to the movement control parameter, and sent a corresponding movement control operation request of the user to the server.

The server may update the location and the speed of the virtual object based on the movement control parameter indicated by the movement control operation request of the user. Moreover, after updating the location and the speed of the virtual object, the server may generate the movement update synchronization packet and send the movement update synchronization packet to the client. The client may update the speed of the virtual object based on the movement update synchronization packet.

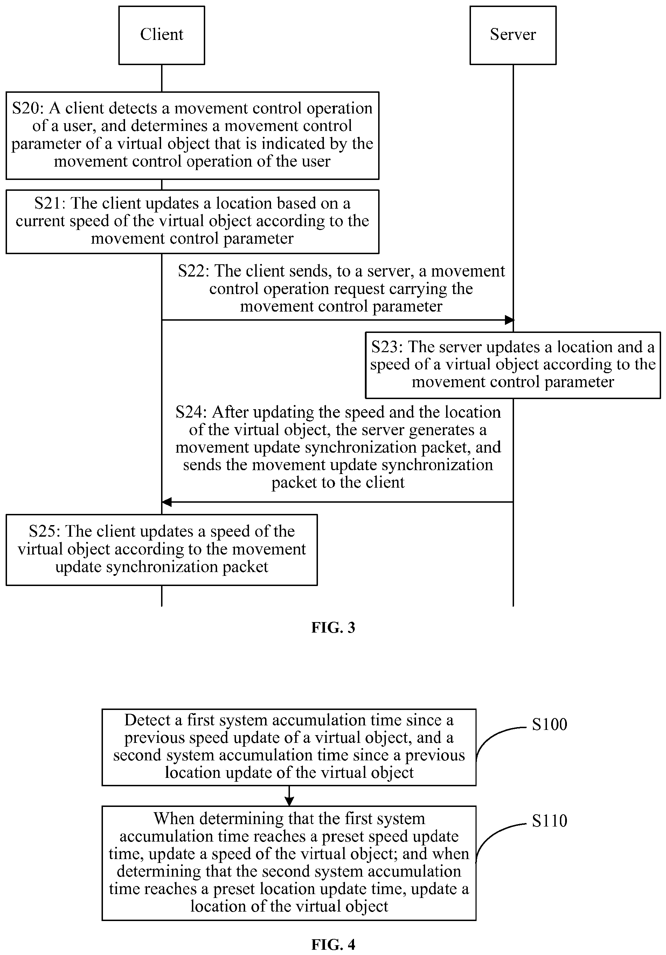

On the basis of the procedure shown in FIG. 2, FIG. 3 is signaling flowchart of a method for synchronizing movement of a virtual object according to another embodiment of the present disclosure. Referring to 3, the procedure may include the following steps S20 to S25.

In step S20, a client detects a movement control operation of a user, and determines a movement control parameter of the virtual object that is indicated by the movement control operation of the user.

The movement control parameter may include: a location control parameter, an orientation control parameter, a speed control parameter, and the like of the virtual object.

In step S21, the client updates a location of the virtual object based on a current speed of the virtual object according to the movement control parameter.

In step S22, the client sends, to a server, a movement control operation request carrying the movement control parameter.

In step S21 and step S22 may be performed simultaneously.

In step S23, the server updates a location and a speed of the virtual object according to the movement control parameter.

In step S24, after updating the speed and the location of the virtual object, the server generates a movement update synchronization packet, and sends the movement update synchronization packet to the client.

The movement update synchronization packet may include synchronization data such as an updated speed, an updated location, and an updated orientation of the virtual object, and a time stamp updated by the server.

In step S25, the client updates a speed of the virtual object according to the movement update synchronization packet.

The client may update the speed by using information such as the updated speed, the updated location and the updated orientation of the virtual object or the time stamp updated by the server, indicated in the movement update synchronization packet.

It may be learned that, in addition to updating the speed of the virtual object each time when the first system accumulation time reaches the preset speed update time according to the procedure shown in FIG. 2, the client may further instantly and proactively update the speed of the virtual object when receiving the movement update synchronization packet sent by the server. In addition to updating the location of the virtual object each time when the second system accumulation time reaches the preset location update time according to the procedure shown in FIG. 2, the client may further instantly and proactively update the location of the virtual object when detecting the movement control operation of the user and based on the movement control parameter indicated by the movement control operation of the user.

It should be noted that, the client may instantly and proactively updates the speed of the virtual object when receiving the movement update synchronization packet, but, the client does not need to update the location of the virtual object based on the movement update synchronization packet when instantly and proactively updating the location of the virtual object. In an implementation, the client and the server may have a same set of virtual object location update logic or algorithm. The client and the server may independently update the location of the virtual object according to the movement control parameter and based on the same virtual object location update logic or algorithm. However, the client is required to proactively update the speed of the virtual object only after receiving the movement update synchronization packet from the server.

In addition to updating the speed and the location of the virtual object each time when the system accumulation time reaches the preset update time according to the procedure shown in FIG. 2, the server may instantly and proactively update the speed and the location of the virtual object when receiving the movement control operation request of the user and based on the movement control parameter indicated by the movement control operation request of the user.

The client may recalculate the first system accumulation time each time after updating the speed of the virtual object by using the method shown in FIG. 3. The client may recalculate the second system accumulation time each time after updating the location of the virtual object by using the method shown in FIG. 3. The server may recalculate the system accumulation time each time after updating the speed and the location of the virtual object by using the method shown in FIG. 3.

In an alternative manner, the client may update the location and the speed of the virtual object after receiving the movement update synchronization packet sent by the server instead of directly updating the location of the virtual object based on the detected movement control operation of the user.

In an alternative manner, in addition to generating the movement update synchronization packet when receiving the movement control operation request of the user, the server may also update the location and the speed of the virtual object, generate the movement update synchronization packet and send the movement update synchronization packet to the client when detecting that a moving state of the virtual object in a virtual scenario such as a game switches. In this case, the client may update the speed of the virtual object based on the movement update synchronization packet, or simultaneously update the speed and the location of the virtual object based on the movement update synchronization packet.

From a perspective of the client, FIG. 4 shows a flowchart of a method for synchronizing movement of a virtual object according to an embodiment of the present disclosure. The method may be performed by the client such as a game client. Referring to 4, the method may include the following steps S100 and S110.

In step S100, a first system accumulation time since a previous speed update of the virtual object, and a second system accumulation time since a previous location update of the virtual object are detected.

In step S110, a speed of the virtual object is updated when the first system accumulation time reaches a preset speed update time, and a location of the virtual object is updated when the second system accumulation time reaches a preset location update time.

The preset speed update time is greater than the preset location update time, the first system accumulation time may be recalculated each time after the client updates the speed of the virtual object, and the second system accumulation time may be recalculated each time after the client updates the location of the virtual object.

Because the preset speed update time is greater than the preset location update time, the client may update the speed of the virtual object at a relatively low frequency, and updates the location of the virtual object at a relatively high frequency.

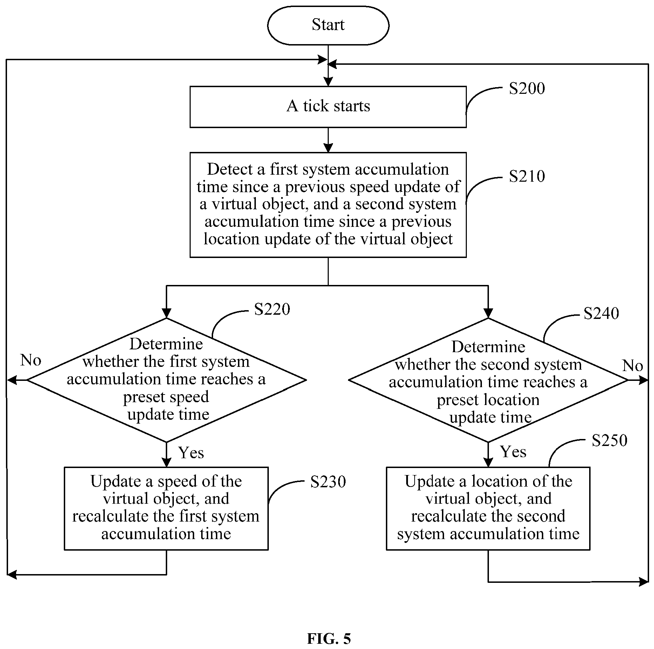

In an implementation, the client may detect the first system accumulation time and the second system accumulation time at an interval of a tick. Correspondingly, FIG. 5 is flowchart of a method for synchronizing movement of a virtual object according to another embodiment of the present disclosure. The method may be performed by the client. Referring to 5, the method may include the following steps S200 and S250.

In step S200, a tick starts.

In step S210, a first system accumulation time since a previous speed update of the virtual object, and a second system accumulation time since a previous location update of the virtual object are detected.

In step S220, it is determined whether the first system accumulation time reaches a preset speed update time. If the first system accumulation time reaches the preset speed update time, the procedure goes to step S230, and if the first system accumulation time does not reach the preset speed update time, the procedure returns to step S200.

In step S230, a speed of the virtual object is updated, the first system accumulation time is recalculated, and the procedure returns to step S200.

In step S240, it is determined whether the second system accumulation time reaches a preset location update time. If the second system accumulation time reaches the preset location update time, the procedure goes to step S250, and if the second system accumulation time does not reach the preset location update time, the procedure returns to step S200.

In step S250, a location of the virtual object is updated, the second system accumulation time is recalculated, and the procedure returns to step S200.

A tick is only an optional period for performing the method shown in FIG. 5. According to this embodiment of the present disclosure, n ticks may be set as a period for performing the method shown in FIG. 5. That is, the client may detect, at an interval of n ticks, the first system accumulation time since the previous speed update of the virtual object and the second system accumulation time since the previous location update of the virtual object, update the speed of the virtual object each time when the first system accumulation time reaches the preset speed update time, and update the location of the virtual object each time when the second system accumulation time reaches the preset location update time.

n may be an integer not less than 1.

When the speed of the virtual object is updated by using the method shown in FIG. 4, the client may determine a speed update trend (for example, a speed decrease or a speed increase) of the virtual object, and an acceleration value (for example, an acceleration value which corresponds to a speed update within a most recent set time segment at the speed update trend) corresponding to the speed update trend according to a movement update synchronization packet most recently sent by the server, to update, according to the speed update trend and the acceleration value, the speed of the virtual object each time when the first system accumulation time reaches the preset speed update time.

If the movement update synchronization packet that is most recently sent by the server is triggered by an acceleration operation of the user, the speed update trend of the virtual object that is indicated by the movement update synchronization packet may be a speed increase, and a corresponding acceleration value triggered by the acceleration operation of the user is, for example, 3 m/s², so that the client may update the speed of the virtual object by performing an operation with the acceleration being 3 m/s² based on a current speed of the virtual object when the first system accumulation time reaches the preset speed update time.

When the location of the virtual object is updated by using the method shown in FIG. 4, the client may determine a current location orientation and the current speed of the virtual object, to update the location of the virtual object by using the current location orientation and the current speed each time when the second system accumulation time reaches the preset location update time.

If the current speed the virtual object is, for example, 5 m/s, the current location orientation is to run toward the north, and there is no user operation interference, the client may update the location of the virtual object toward the north based on the speed of 5 m/s when the second system accumulation time reaches the preset location update time.

In addition to regularly updating the speed and the location of the virtual object by using the methods shown in FIG. 4 and FIG. 5, alternatively, the client may instantly and proactively update the location of the virtual object based on an operation of the user, or instantly and proactively update the speed of the virtual object based on the movement update synchronization packet fed back by the server.

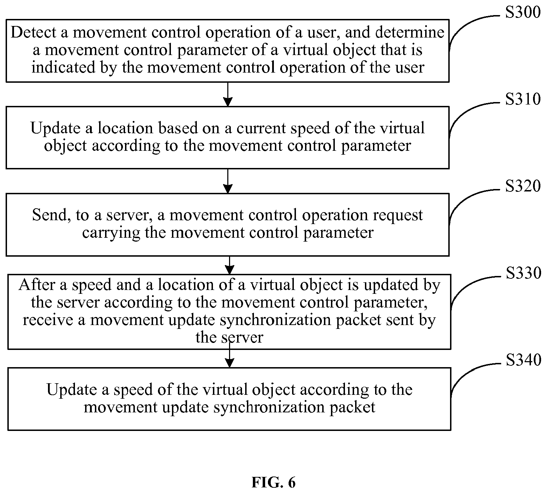

FIG. 6 is a flowchart of a method for synchronizing movement of a virtual object according to another embodiment of the present disclosure. The method may be performed by the client. Referring to FIG. 6, the method may include the following steps S300 to S340.

In step S300, a movement control operation of a user is detected, and a movement control parameter of the virtual object that is indicated by the movement control operation of the user is determined.

The movement control parameter may include: a location control parameter, an orientation control parameter, a speed control parameter, and the like of the virtual object.

In step S310, a location of the virtual object is updated based on a current speed of the virtual object according to the movement control parameter.

The current speed of the virtual object may be a speed of the virtual object when the location of the virtual object is currently updated.

Updating the location of the virtual object by the client based on the current speed and according to the movement control parameter may be considered as a form in which the client updates the location of the virtual object. Based on the foregoing concept that the second system accumulation time is recalculated each time after the client updates the location of the virtual object, the client needs to recalculate the second system accumulation time after updating the location of the virtual object based on the current speed and according to the movement control parameter, for example, to set a current second system accumulation time to zero and recalculate the second system accumulation time.

In step S320, a movement control operation request carrying the movement control parameter is sent to a server.

In step S330, after the speed and the location of the virtual object is updated by the server according to the movement control parameter, a movement update synchronization packet sent by the server is received.

The movement update synchronization packet may include synchronization data such as an updated speed, an updated location, and an updated orientation of the virtual object, and a time stamp updated by the server.

In step S340, the speed of the virtual object is updated according to the movement update synchronization packet.

The client may update the speed by using information such as the updated speed, the updated location, and the updated orientation of the virtual object or the time stamp updated by the server, indicated in the movement update synchronization packet. For example, the client may compare the time stamp updated by the server with a current time to determine a time difference, and determine a speed adjustment value of the virtual object that corresponds to the time difference based on the updated speed, the updated location and the updated orientation of the virtual object, to update the speed of the virtual object on the client side based on the updated speed indicated by the movement update synchronization packet and the speed adjustment value.

In an implementation, in a case that the network to which the client and the server are connected is in a good condition, for example, a network delay is less than a predetermined delay, the client may update the speed of the virtual object by directly using the updated speed indicated in the movement update synchronization packet.

Updating the speed of the virtual object by the client according to the movement update synchronization packet is considered as a form in which the client updates the speed of the virtual object. Based on the foregoing concept that the first system accumulation time is recalculated each time after the client updates the speed of the virtual object, the client needs to recalculate the first system accumulation time after updating the speed of the virtual object according to the movement update synchronization packet, for example, to set a current first system accumulation time to zero and recalculate the first system accumulation time.

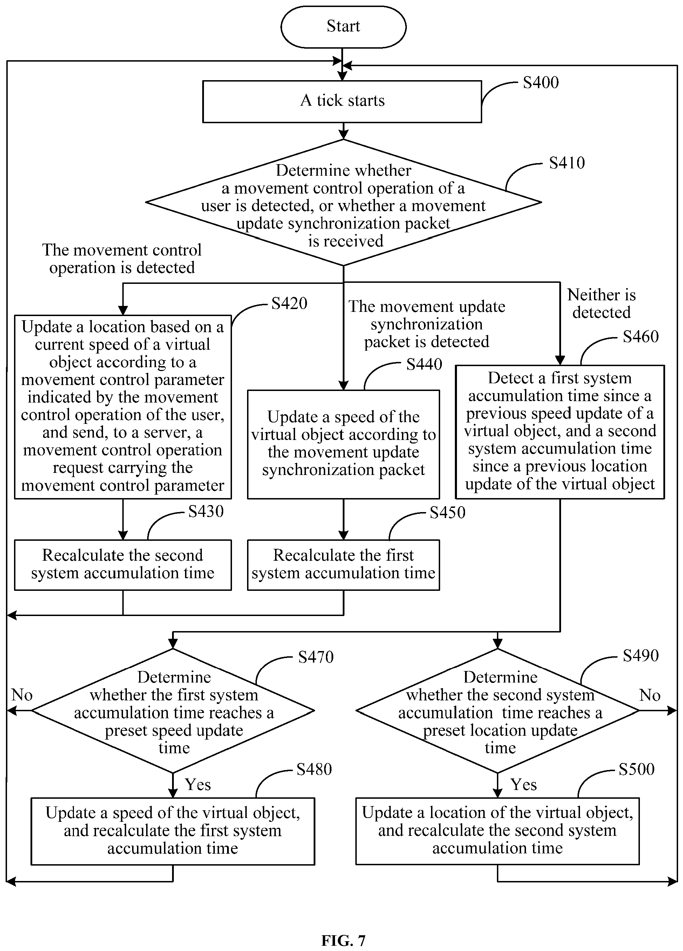

In combination with the method shown in FIG. 5, a client may detect whether the movement control operation of the user exists at an interval of a tick. Correspondingly, FIG. 7 is a flowchart of a method for synchronizing movement of a virtual object according to another embodiment of the present disclosure. The method may be performed by the client. Referring to 7, the method may include the following steps S400 to S500.

In step S400, a tick starts.

In step S410, it is determined whether a movement control operation of a user is detected, or whether a movement update synchronization packet sent by a server is received. If the movement control operation of the user is detected, the procedure goes to step S420. If the movement update synchronization packet is detected, the procedure goes to step S440. If neither the movement control operation of the user nor the movement update synchronization packet is detected, the procedure goes to Step S460.

In step S420, a location of a virtual object is updated based on a current speed of the virtual object according to a movement control parameter indicated by the movement control operation of the user, and a movement control operation request carrying the movement control parameter is sent to the server.

In step S430, a second system accumulation time is recalculated, and the procedure returns to Step S400.

In step S440, a speed of the virtual object is updated according to the movement update synchronization packet.

In step S450, a first system accumulation time is recalculated, and the procedure returns to Step S400.

In step S460, a first system accumulation time since a previous speed update of a virtual object, and a second system accumulation time since a previous location update of the virtual object are detected.

In step S470, it is determined whether the first system accumulation time reaches a preset speed update time. If the first system accumulation time reaches the preset speed update time, the procedure goes to step s480, and if the first system accumulation time does not reach the preset speed update time, the procedure returns to step S400.

In step S480, a speed of the virtual object is updated, the first system accumulation time is recalculated, and the procedure returns to step S400.

In step S490, it is determined whether the second system accumulation time reaches a preset location update time. If the second system accumulation time reaches the preset location update time, the procedure goes to step S500, and if the second system accumulation time does not reach the preset location update time, the procedure returns to step S400.

In step S500, a location of the virtual object is updated, the second system accumulation time is recalculated, and the procedure returns to step S400.

According to this embodiment of the present disclosure, if neither the movement control operation of the user nor the movement update synchronization packet sent by the server is detected, the client may perform updating at different frequencies according to different requirements on updating of the speed and the location of the virtual object. The speed of the virtual object is updated by the client at a low frequency indicated by the server. That is, each time when the first system accumulation time reaches the preset speed update time, the client updates the speed of the virtual object once. The location of the virtual object is updated by the client at a high frequency. That is, each time when the second system accumulation time reaches the preset location update time, the client updates the location of the virtual object once, where the preset location update time is less than the preset speed update time.

However, when the movement control operation of the user or the movement update synchronization packet sent by the server is detected, the client may proactively and instantly update the speed and the location of the virtual object, to ensure timeliness of updating the speed and the location of the virtual object.

According to this embodiment of the present disclosure, updating of the speed and the location of the virtual object meets an actual operating requirement of a virtual scenario, a movement synchronization effect with a relatively high accuracy is achieved, and performance overhead of the server is greatly reduced.

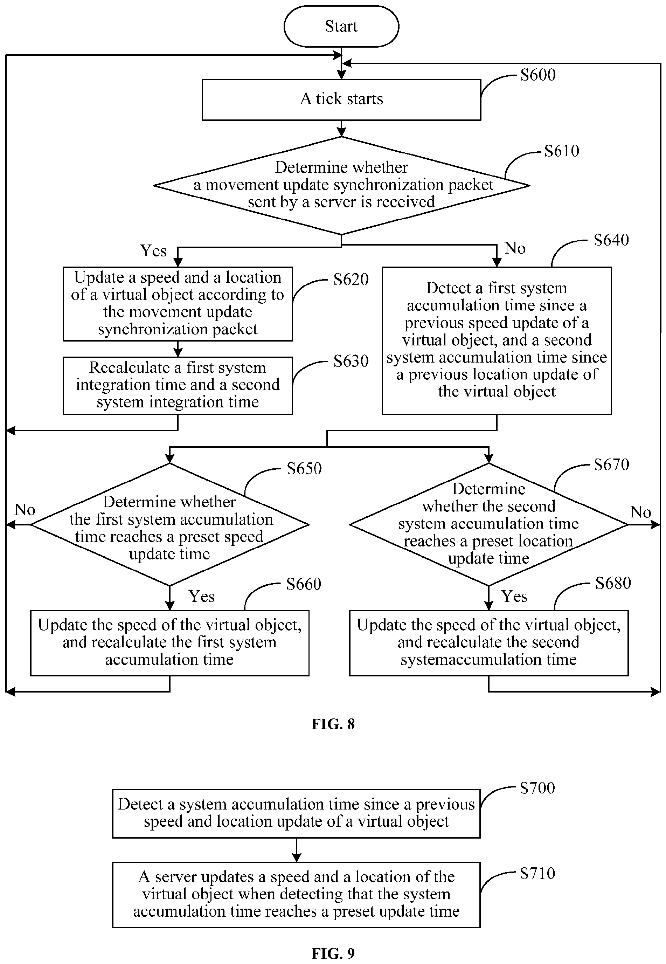

Alternatively, the client may update the speed and the location of the virtual object when receiving a movement update synchronization packet sent by a server. Correspondingly, FIG. 8 is a flowchart of a method for synchronizing movement of the virtual object according to another embodiment of the present disclosure. The method may be performed by the client. Referring to 8, the method may include the following steps S600 to S680.

In step S600, a tick starts.

In step S610, it is determined whether a movement update synchronization packet sent by a server is received. If the movement update synchronization packet sent by the server is received, the procedure goes to step S620, and if the movement update synchronization packet sent by the server is not received, the procedure goes to step S640.

The movement update synchronization packet may be generated based on a movement control operation of a user. For example, after detecting the movement control operation of the user, the client may send a corresponding movement control operation request to the server. After updating a speed and a location of the virtual object based on the movement control operation request, the server may generate the movement update synchronization packet indicating information such as an updated speed, an updated location and an updated orientation of the virtual object or a time stamp updated by the server, and send the movement update synchronization packet to the client.

Alternatively, the movement update synchronization packet may be generated based on switch of a moving state of the virtual object. After detecting that the moving state of the virtual object switches in a virtual scenario, the server may update the speed and the location of the virtual object, generate the movement update synchronization packet, and send the movement update synchronization packet to the client.

In step S620, the speed and the location of the virtual object are updated according to the movement update synchronization packet.

The client may update the speed and the location by using information such as the updated speed, the updated location and the updated orientation of the virtual object, and the time stamp updated by the server indicated in the movement update synchronization packet.

If a time difference between a current time of the client and the time stamp updated by the server is determined, a speed adjustment value of the virtual object that corresponds to the time difference is determined based on the updated speed, the updated location and the updated orientation of the virtual object, so that the speed of the virtual object is updated on the client side based on the updated speed indicated by the movement update synchronization packet and the speed adjustment value. Meanwhile, a location adjustment value of the virtual object that corresponds to the time difference is determined based on the updated speed, the updated location and the updated orientation of the virtual object, so that the location of the virtual object is updated on the client side based on the updated location indicated by the movement update synchronization packet and the location adjustment value.

In an implementation, in a case that the network to which the client and the server are connected is in a good condition, the client may alternatively update the speed of the virtual object by directly using the updated speed indicated in the movement update synchronization packet, and update the location of the virtual object by using the updated location indicated in the movement update synchronization packet.

In step S630, a first system accumulation time and a second system accumulation time are recalculated, and the procedure returns to step S600.

In step S640, the first system accumulation time since a previous speed update of a virtual object, and a second system accumulation time since a previous location update of the virtual object are detected.

In step S650, it is determined whether the first system accumulation time reaches a preset speed update time. If the first system accumulation time reaches the preset speed update time, the procedure step S660, and if the first system accumulation time does not reach the preset speed update time, the procedure returns to step S600.

In step S660, the speed of the virtual object is updated, the first system accumulation time is recalculated, and the procedure returns to step S600.

In step S670, It is determined whether the second system accumulation time reaches a preset location update time. If the second system accumulation time reaches the preset location update time, the procedure goes to step S680, and if the second system accumulation time does not reach the preset location update time, the procedure returns to step S600.

In step S680, the speed of the virtual object is updated, the second system accumulation time is recalculated, and the procedure returns to step S600.

From a perspective of a server, FIG. 9 is a flowchart of a method for synchronizing movement of a virtual object according to another embodiment of the present disclosure. The method may be performed by the server. The server may be a game server. Referring to FIG. 9, the method may include the following steps S700 and S710.

In step S700, a system accumulation time since a previous speed and location update of a virtual object is detected.

The system accumulation time is recalculated each time after the server updates a speed and a location of the virtual object.

In step S710, the server updates the speed and the location of the virtual object when detecting that the system accumulation time reaches a preset update time.

The preset update time may be consistent with the preset speed update time used by the client described above. That is, the server updates the speed and the location of the virtual object at the same low frequency, and the frequency at which the server updates the speed and the location is with the same as the low frequency at which the client updates the speed. The system accumulation time is recalculated each time after the server updates the speed and the location of the virtual object.

In an implementation, the server may detect the system accumulation time once at an interval of n ticks, where n is an integer equal to or greater than 1. Specifically, the server may detect the system accumulation time since the previous speed and location update of the virtual object at an interval of a tick, updates the speed and the location of the virtual object when detecting that the system accumulation time reaches the preset update time, and recalculate the system accumulation time.

Alternatively, the server may instantly and proactively update the speed and the location of the virtual object based on a movement control operation of a user.

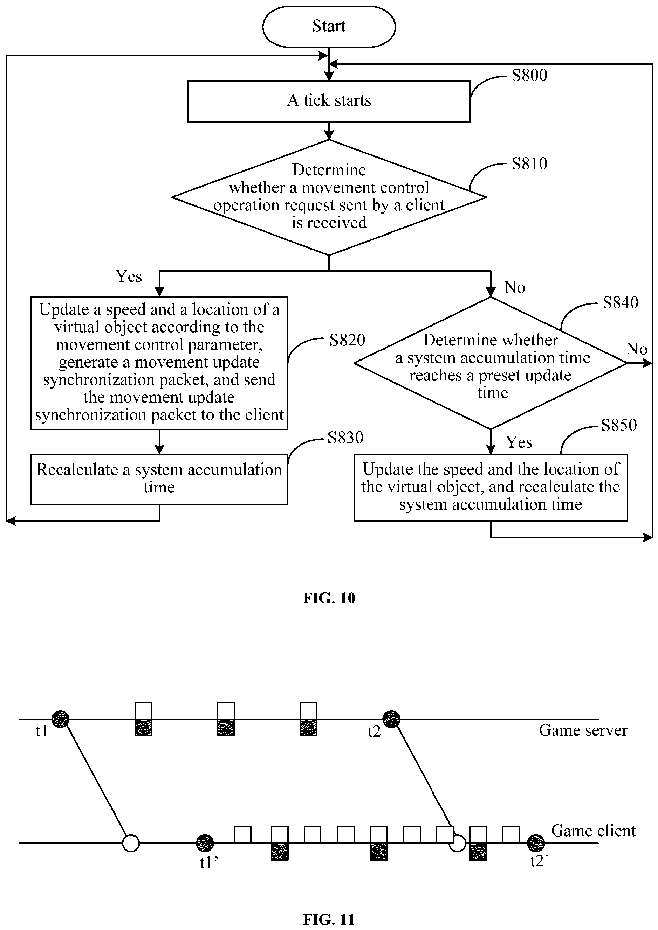

FIG. 10 is a flowchart of a method for synchronizing movement of a virtual object according to another embodiment of the present disclosure. The method may be performed by a server. Referring to 10, the method may include the following steps S800 to S850.

In step S800, a tick starts.

In step S810, it is determined whether a movement control operation request sent by a client is received, where the movement control operation request carries a movement control parameter. If the movement control operation request sent by the client is received, the procedure goes to step S820, and if the movement control operation request sent by the client is not received, the procedure goes to step S840.

In step S820, a speed and a location of the virtual object are updated according to the movement control parameter, and a movement update synchronization packet is generated and is sent to the client.

In step S830, a system accumulation time is recalculated, and the procedure returns to Step S800.

In step S840, it is determined whether a system accumulation time since a previous speed and location update of the virtual object reaches a preset update time. If the system accumulation time reaches the preset update time, the procedure goes to step S850, and if the system accumulation time does not reach the preset update time, the procedure returns to Step S800.

In step S850, the speed and the location of the virtual object is updated, the system accumulation time is recalculated, and the procedure returns to step S800.

Alternatively, the server may update the speed and the location of the virtual object when detecting switch of a moving state of the virtual object, generate the movement update synchronization packet, and send the movement update synchronization packet to the client. The server may detect whether the moving state of the virtual object switches at an interval of a tick. If the moving state switches, the server updates the speed and the location of the virtual object, generates the movement update synchronization packet and sends the movement update synchronization packet to the client. In addition, the server recalculates the system accumulation time, and wait for the elapse of a next interval of a tick. If the moving state does not switch, the server determines whether the system accumulation time reaches the preset update time. If the system accumulation time reaches the preset update time, the server updates the speed and the location of the virtual object, recalculates the system accumulation time and waits for the elapse of a next interval of a tick. If the system accumulation time does not reach the preset update time, the server waits for the elapse of a next interval of a tick.

According to this embodiment of the present disclosure, when there is no the movement control operation request of the user and the moving state of the virtual object does not switch, the server may update the speed and the location of the virtual object at a relatively low frequency considering performance overhead. That is, the server updates the speed and the location of the virtual object each time when the system accumulation time reaches the preset update time. Moreover, the frequency at which the server updates the speed and the location of the virtual object is the same as the frequency at which the client updates the speed of the virtual object when there is no movement control operation of the user and movement update synchronization packet.

However, if the movement control operation request of the user exists or the moving state of the virtual object switches, the client may proactively and instantly update the speed and the location of the virtual object, to ensure timeliness of updating the speed and the location of the virtual object.

According to this embodiment of the present disclosure, the performance overhead of the server may be greatly reduced while achieving a synchronizing movement effect with a relatively high accuracy.

From perspectives of a client and a server, FIG. 11 shows a schematic diagram of timelines of movement update performed by the client and by the server according to an embodiment of the present disclosure. In FIG. 11, the black dot represents a time point at which the client and the server proactively and instantly update the speed and the location, for example, a time point at which the client and the server updates the speed and the location based on an operation of a user, a white dot represents a time point at which the client receives the synchronizing movement packet, a black rectangular point represent a time point at which the client and the server update the speed at a low frequency, and a white rectangular point represent a time point at which the client updates the location at a high frequency or a time point at which the server updates the location at a low frequency.

In FIG. 11, the server updates the speed at a time point t1, which may be caused by a user operation, or may be caused by switch of a moving state of the virtual object. The speed updated by the server needs to be synchronized to the client, and the client may update the speed at a corresponding time point t1' on the timeline. A situation at a time point t2 is similar to the situation at the time point t1.

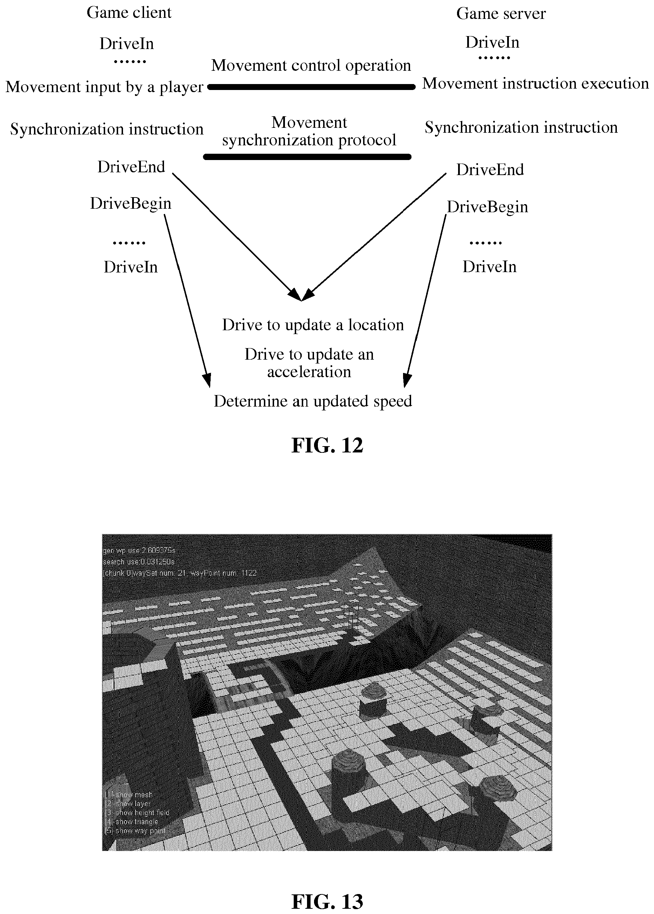

FIG. 12 is a schematic diagram of components of a game client and a game server according to an embodiment of the present disclosure. Referring to FIG. 12, a DriveIn on the client side is configured to: calculate a first system accumulation time and a preset speed update time, and update the speed if the first accumulation time reaches the preset speed update time. In addition, the DriveIn on the client side is further configured to: calculate a relationship between a second system accumulation time and a preset location update time, and update the location if the second accumulation time reaches the preset location update time. Both DriveEnds on the client side and on the server side may be configured to perform location update. Both DriveBegins on the client side and on the server side may be configured to perform a speed update. When the DriveIn is satisfied, the client and the server may use a same set of logic to perform speed update and location update. However, a frequency at which the client updates the location is a high frequency, and a frequency at which the client updates the speed and a frequency at which the server updates the speed and the location are a same low frequency.

With reference to FIG. 11, the DriveIn processes speed and location updates at the rectangular points (black or white). Processes of the client receiving a movement update synchronization packet from the server at a time point t2', calculating a displacement and a speed change within a period from a previous DriveIn to the time point t2', and then calculating a new movement speed by using a movement parameter in the movement update synchronization packet are performed by the DriveBegin. When it is ensured that updated results output by the server and the client at the black dots and black rectangular points in Figure 11 are the same, even if frequencies at which the client and the server updates the location at the white rectangular points are different, moving representations at the client and at the server are highly consistent, thereby achieving a good movement synchronization effect, and obtaining a movement synchronization effect with a relatively high accuracy.

The low frequency at which the server updates the speed and the location of the virtual object may be different from the high frequency at which the client updates the location of the server by a preset times. That is, a preset update time for updating the speed and the location by the server may be a preset times a preset time for updating the location by the client. The preset times may be defined according to actual running of a virtual scenario such as a game, and may be for example, 3 times to 8 times. In an implementation, the preset times is 6 times. In this embodiment of the present disclosure, the preset times may be a natural number greater than 3.

For example, a case where the low frequency is one update per 100ms (milliseconds), and the high frequency is one update per 16ms is taken as an example. That is, the preset speed update time and the preset update time are 100ms, and the preset location update time is 16ms. When neither the movement control operation of the user nor the movement synchronization packet exists, the client may update the location of the virtual object at an interval of 16ms, and update the speed of virtual object at an interval of 100ms. The location update frequency is about six times the speed update frequency. When there is no movement control operation request of the user and the moving state of the virtual object does not switch, the server may update the speed and the location of the virtual object at an interval of 100ms.

Optionally, the server may specify the low frequency according to different requirements of the virtual object. For example, a low frequency corresponding to a game character controlled by a player is 50ms, a low frequency corresponding to a logical object is 100ms, and a low frequency corresponding to an AI object is 120ms.

It should be noted that the foregoing specific numbers are only optional, and do not limit the scope of the present disclosure.

The method for synchronizing movement of a virtual object according to the embodiments of the present disclosure may be applied to a game scenario. That is, the virtual scenario may be a game scenario, and the virtual object may be a game object. The game is, for example, a 2D (two-dimensional) game or a 3D (three-dimensional) game. In the conventional technology, movement synchronization of the game object in the 3D game is mainly simulated by using 2D grids plus a height map. FIG. 13 shows a solution for synchronizing movement which is simulated based on 2D grids in the conventional technology. It can be learned from FIG. 13 that, in the conventional technology, a 3D scenario is 2D meshed, and movement passability is calculated by using connectivity between grids. Such simulation is unsuitable for a complex 3D scenario. For example, movement synchronization of the game object under a complex situation, such as dynamic blockage, cannot be successfully implemented.

In this embodiment of the present disclosure, both the game client and the game server may control movement of the game object in the 3D game scenario by using character controllers, and update a speed and a location of the game object based on the character controllers. For example, the game server may update the location and the speed at a low frequency based on the character controller, or the game server may update the speed and the location based on the character controller when a movement control operation request exists or a moving state of the game object switches. In addition, the game client may update, based on the character controller, the location at a high frequency, and update the speed at a low frequency. The game client may update the speed and the location based on the character controller when a movement control operation of a user or a movement update synchronization packet exists. Character Controller is a technology for simulating movement, collision, and interaction of characters in a 3D physical world.

According to this embodiment of the present disclosure, during creation of the virtual scenario in a 3D form, both configuration and export of a scenario resource can be implemented by using a scenario editor. The scenario editor is a tool that is developed by a developing device in a procedure of developing a virtual scenario such as a game and that is used for editing the virtual scenario. The scenario editor may be edited by an artist and a planner, to develop a 3D scenario used in the virtual scenario. 3D scenario data exported from the scenario editor is loaded and used by the client (for example, the game client) and the server (for example, the game server) when the virtual scenario runs.

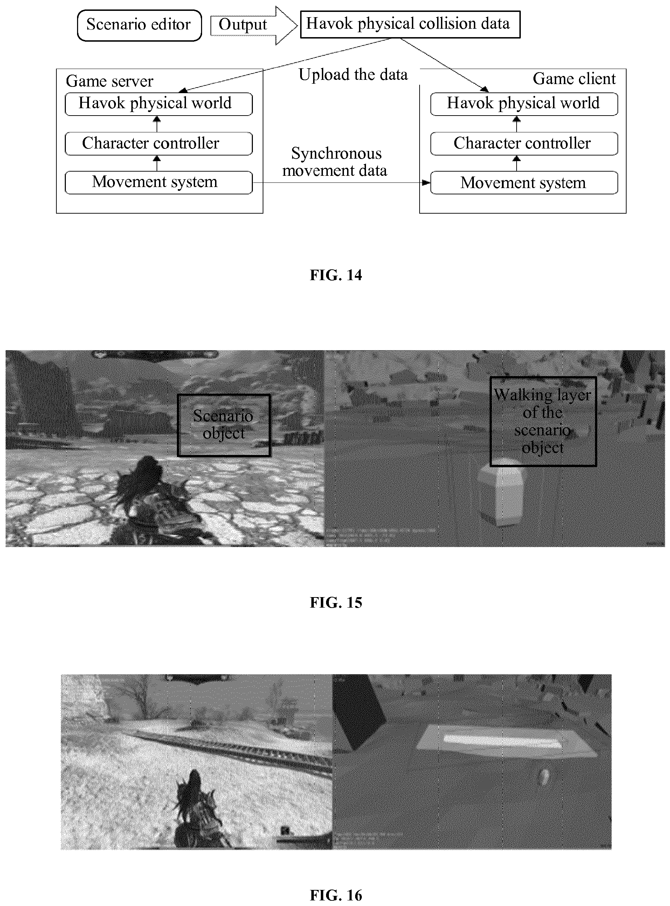

In this embodiment of the present disclosure, after a 3D scenario is created by using the scenario editor, the scenario editor may export same topographic walking layer data of the 3D scenario, physical collision data of a static object in the 3D scenario, physical collision data of a dynamic object in the 3D scenario, and the like to the client (for example, the game client) and the server (for example, the game server). FIG. 14 is a schematic diagram of showing a relationship between the scenario editor and the game client and the game server.

Using a virtual game scenario as an example, the game client may receive terrain walking layer data of a 3D scenario, physical collision data of a static object in the 3D scenario, and physical collision data of a dynamic object in the 3D scenario that are exported from the scenario editor and that are also received by the game server. The game server may receive the terrain walking layer data of the 3D scenario, the physical collision data of the static object in the 3D scenario, and the physical collision data of the dynamic object in the 3D scenario that are exported from the scenario editor and that are also received by the game client.

The physical collision data is data of a physical rigid body that is exported from model mesh data of an object having a collision attribute, such as terrain or an object. For example, a model of a box is a cuboid, and data that is generated when a physical rigid body generated based on the cuboid and representing the box participates in movement collision is the physical collision data.

FIG. 15 is a schematic diagram showing physical collision data of a static object in the 3D scenario, and FIG. 16 is a schematic diagram showing physical collision data of a dynamic object in the 3D scenario. In FIG. 15, the static object is a stationary object in the scenario, such as a stone, and the physical collision data of the static object is physical collision data when the static object participates in the movement collision. In FIG. 15, a model of the stone is shown in a box on the left side, and the physical collision data corresponding to the stone is shown in a box on the right side. In FIG. 16, the dynamic object is an object that can move relative to the static object and that has logical behavior. In FIG. 16, a model of a scaling ladder is shown in a box on the left side, and physical collision data corresponding to the scaling ladder is shown in a box on the right side.

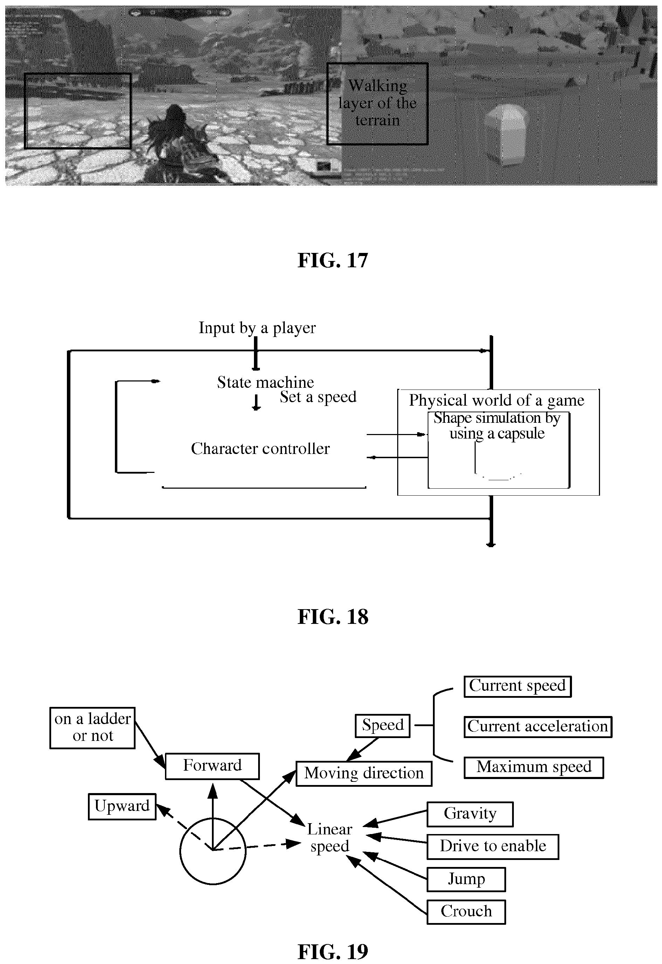

The terrain walking layer data is data of a physical rigid body that is generated based on mesh data of a terrain and that represents the ground participating in the movement collision. FIG. 17 is a schematic diagram showing terrain walking layer data in the 3D scenario. In FIG. 17, a terrain model, that is, an expression of the terrain in the game, is shown in a box on the left side, and the physical collision data corresponding to the terrain, that is, a physical model of the terrain participating in the movement collision is shown in a box on the right side.

According to this embodiment of the present disclosure, on the basis of updating the speed and the location at different frequencies for different update requirements on the speed and the location of the virtual object, the speed and the location of the virtual object may be updated by using a character controller. Moreover, the server and the client have the same terrain walking layer data of the 3D scenario, the same physical collision data of the static object in the 3D scenario, the same physical collision data of the dynamic object in the 3D scenario, and the like that are edited by using the scenario editor. With this setting, according to this embodiment of the present disclosure, it may be ensure that movement synchronization is performed with a relatively high accuracy, performance overhead of the server is reduced, and a movement synchronization requirement in the 3D scenario under a complex situation can be resolved, to implement movement synchronization of the virtual object based on a 3D scenario of a real physical collision.

In this embodiment of the present disclosure, the character controller is a movement model of the virtual object in the 3D scenario that is simulated by a bottom layer. The client and the server use the same character controller. Based on the character controller, the movement model of the virtual object may be defined in this embodiment of the present disclosure. In this embodiment of the present disclosure, the movement model of the virtual object may be implemented by using a shape (capsule). That is, movement of the virtual object is simulated by using the shape. According to this embodiment of the present disclosure, when the client or the server detects that a speed or a location of a virtual object needs to be updated (including a situation of instant and proactive update and a situation of regular update at a high frequency or at a low frequency), a character controller of the virtual object in the client or the server may calculate a new speed or location of the virtual object. During each speed or location update, character controller may perform linear cast processing on a movement model of the virtual object, to proactively query the speed or location of the virtual object in a physical world of the virtual scenario such as a game, to update the speed or location of the virtual object. In addition, may maintain moving state logic of the character controller may be maintained by using a state machine. FIG. 18 is a schematic diagram of a movement model based on a character controller.

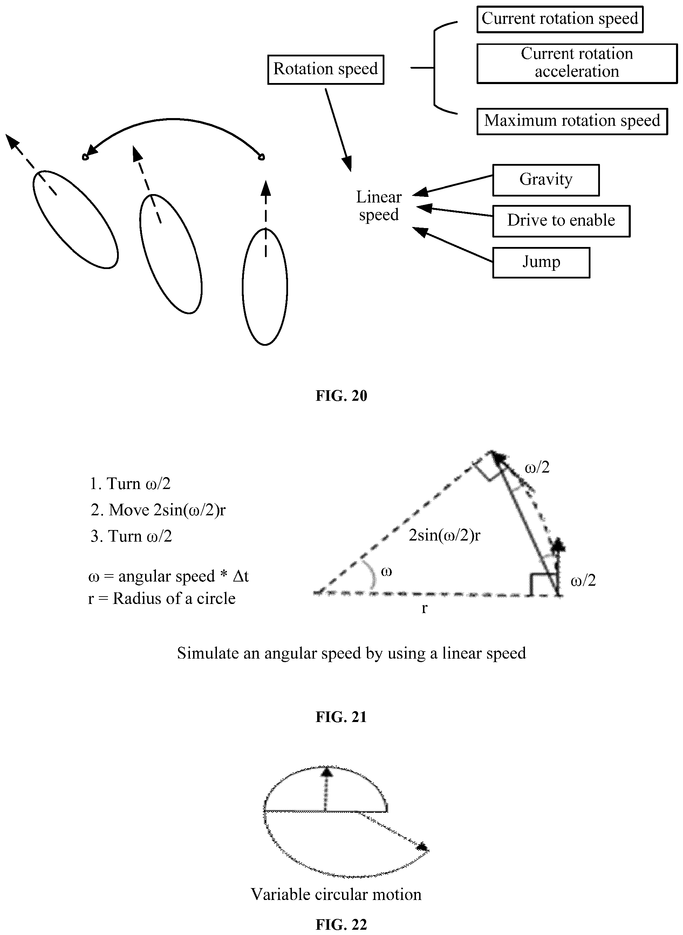

Using a ridding and cutting game as an example, to implement real and abundant movement expressions while ensuring stability of a whole movement model, in this embodiment of the present disclosure, based on a Havok engine, an extensible character controller may be used to define movement models of an infantryman and a rider. Different parameter combinations and settings are defined by using the movement models of the infantryman and the rider, so that the movement model of the infantryman may support constant-speed or variable-speed rectilinear motion in any direction, the movement model of the rider may support circular motion or variable circular motion (with an angular speed being simulated by using a linear speed), and the defined movement models are asymmetric movement collision models. FIG. 19 shows the defined infantryman movement model, FIG. 20 shows the defined rider movement model, FIG. 21 is a schematic diagram showing the angular speed simulated by using a linear speed, and FIG. 22 is a schematic diagram showing the variable circular motion.

Based on the extensible character controller, for any new movement requirement, required parameters can be selected from combined movement parameters according to an actual requirement and synchronized to the client without changing a bottom-layer algorithm of movement synchronization of the client or the server. The combined movement parameters are shown in blocks in FIG. 19 and FIG. 20.

To resolve a problem that, in a complex network environment, movement pull of the virtual object may occur to the virtual object during movement synchronization between the client and the server, in this embodiment of the present disclosure, a buffer period may be set on the client side, to reduce movement nonsynchronization of the virtual object between the client and the server that is caused by network fluctuation.

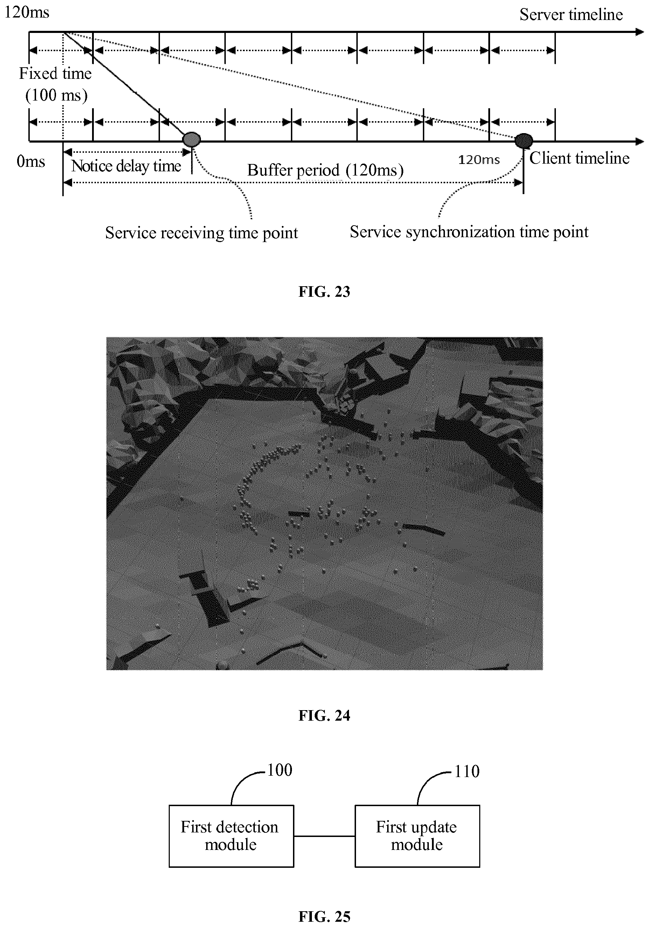

As shown in FIG. 23, the buffer period is used for the server and the client to perform movement synchronization of the virtual object, a fixed time represents a stable update time, a notice delay time represents a response delay (since the network is complex, the response delay is dynamically unpredictable) from the client to the server, and a service receiving time point represents a time point at which the client receives a movement update synchronization packet from the server.

Under normal conditions, the buffer period is greater than the notice delay time. Therefore, a service synchronization time point of the client should be executed after the service receiving time point. This case is healthy, and a result of the movement synchronization of the virtual object between the client and the server is the best. However, the network environment is always complex, and performances of the client and the server may vary. Consequently, the buffer period may be not greater than the notice delay time, and the service synchronization time point is passed when the client executes the service receiving time point. In this case, the client needs to update a current first system time and a current second system time, and recalculate the first system time and the second system time.

Specifically, the client may determine the response delay between the client and the server, and determine that the movement synchronization of the virtual object is normally performed if the preset buffer period is greater than the response delay. If the preset buffer period is less than the response delay, the client may recalculate the first system time and the second system time, to ensure normal processing of subsequent movement synchronization.

Due to factors such as a unstable network, for network games that are subject to a moving state update result of the virtual object calculated by the server, movement pull phenomena of the virtual object inevitably occurs. In this case, to ensure a locally smooth behavior of the client, when a difference between a first update location of the virtual object that is locally determined by the client and a second update location of the virtual object that is indicated in the movement update synchronization packet from the server is great (for example, the location difference is greater than a preset location difference), the client may linearly move, in multiple set frames, the virtual object from the first update location of the virtual object to the second update location of the virtual object.

For example, if the update location of the virtual object calculated by the client is x1, and the update location of the virtual object indicated in the movement update synchronization packet from the server is x2, where x2 is much greater than x1, that is, the location difference is greater than the preset location difference, the client may linearly move, in multiple future frames, the virtual object from the location x1 to the location x2, to ensure the smooth behavior of the client.

In this embodiment of the present disclosure, alternatively, a manner in which the server trusts a location result calculated by the client to some extent is used to further reduce performance overhead of the server. Correspondingly, the client may report a determined update location of the virtual object to the server. The server may determine a location difference between the update location of the virtual object reported by the client and a location of the virtual object that is most recently determined by the server. When the determined location difference is less than a preset location threshold, the server can trust the update location of the virtual object reported by the client, and the server may update a location of the virtual object to the update location reported by the client.

By means of tests, the inventor finds that, by implementing the method for synchronizing movement of a virtual object provided according this embodiment of the present disclosure, overhead for the synchronizing movement only occupies less than 5% of a single core of a CPU on the server end, and a single map server may support thousands of players who moves and fights simultaneously. FIG. 24 is a schematic diagram of a game scenario in which the method for synchronizing movement of a virtual object provided in this embodiment of the present disclosure is applied. Since performance overhead of a server is low, and the accuracy of movement synchronization between the server and the client is relatively high, the game may support movement simulation and movement synchronization of multiple objects in a 3D scenario. Spheres in the FIG. 24 represent virtual objects.

A client according to an embodiment of the present disclosure is described blow, and reference may be made between the following descriptions and content of the foregoing method procedure.

FIG. 25 is a block diagram showing a structure of a client according to an embodiment of the present disclosure. Referring to FIG. 25, the client may include: a first detection module 100 and a first update module 110.

The first detection module 100 is configured to detect a first system accumulation time since a previous speed update of a virtual object, and a second system accumulation time since a previous location update of the virtual object.

The first update module 110 is configured to update a speed of the virtual object when the first system accumulation time reaches a preset speed update time, and update a location of the virtual object when the second system accumulation time reaches a preset location update time.

The preset speed update time is greater than the preset location update time, the first system accumulation time is recalculated each time after the client updates the speed of the virtual object, and the second system accumulation time is recalculated each time after the client updates the location of the virtual object.

In an implementation, the first detection module 100 is configured to: detect the first system accumulation time at an interval of n ticks after the previous speed update of the virtual object, and detect and the second system accumulation time at an interval of n ticks after the previous location update of the virtual object, where n is an integer not less than 1.

In an implementation, the client is further configured to: detect a movement control operation of a user, determine a movement control parameter of the virtual object that is indicated by the movement control operation of the user, update the location the virtual object based on a current speed of the virtual object according to the movement control parameter, send a movement control operation request carrying the movement control parameter to a server, receive a movement update synchronization packet sent by the server after a speed and a location of the virtual object are updated by the server according to the movement control parameter, and update the speed of the virtual object according to the movement update synchronization packet.

In an implementation, the client is further configured to: receive a movement update synchronization packet sent by a server, and update the speed and the location of the virtual object according to the movement update synchronization packet.

In an implementation, the first update module 110 is configured to: when updating the speed of the virtual object, determine a speed update trend of the virtual object and an acceleration value corresponding to the speed update trend according to a movement update synchronization packet that is most recently sent by a server, and update the speed of the virtual object according to the speed update trend and the acceleration value.

In an implementation, the first update module 110 is configured to: when updating the location of the virtual object, determine a current location orientation and a current speed of the virtual object, and update the location of the virtual object by using the current location orientation and the current speed.

In an implementation, the client updates the speed and/or the location of the virtual object based on a character controller.

In an implementation, the client is further configured to define a movement model of the virtual object based on a character controller, where the movement model of the virtual object is implemented by using a shape.

Correspondingly, the client is configured to: when updating the speed or the location of the virtual object based on the character controller, perform linear cast processing on the movement model of the virtual object each time when updating the speed or the location of the virtual object, to proactively query a speed or a location of the virtual object in a physical world of a game, to update the speed or the location of the virtual object.

In an implementation, the client is configured to: when defining the movement model of the virtual object based on the character controller, define a movement model of an infantryman and a movement model of a rider by using an extensible character controller, to define different parameter combinations and settings by using the movement models of the infantryman and the rider, so that the movement model of the infantryman supports constant-speed or variable-speed rectilinear motion in any direction, and the movement model of the rider supports circular motion or variable circular motion.

In an implementation, the client is further configured to receive terrain walking layer data of a 3D scenario, physical collision data of a static object in the 3D scenario, and physical collision data of a dynamic object in the 3D scenario that are exported from a scenario editor and that are also received by a server.

In an implementation, the client is further configured to: determine a response delay between the client and a server, determine that movement of the virtual object is normally synchronized if a preset buffer period is greater than the response delay, and recalculate a first system time and a second system time if the preset buffer period is less than the response delay.

In an implementation, the client is further configured to: when receiving a movement update synchronization packet from a server, calculate a location difference between a locally determined first update location of the virtual object and a second update location of the virtual object indicated in the movement update synchronization packet from the server, and linearly move the virtual object from the first update location of the virtual object to the second update location of the virtual object in multiple set frames if the calculated location difference is greater than a preset location difference.

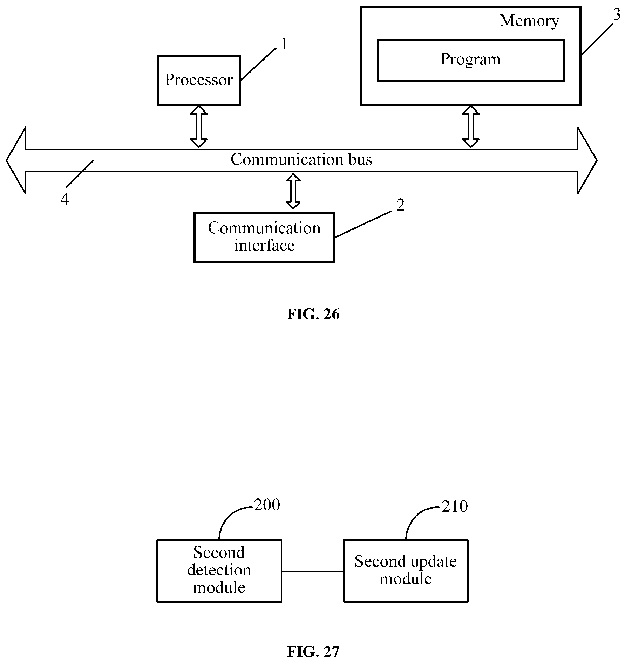

The client may be provided on a terminal device such as a mobile phone, a tablet computer, or a notebook. FIG. 26 is a block diagram showing a hardware structure of a terminal device provided with the client. Referring to FIG. 26, the terminal device may include: a processor 1, a communications interface 2, a memory 3, and a communications bus 4.

The processor 1, the communications interface 2, and the memory 3 communicate with each other via the communications bus 4.

The communications interface 2 may be an interface of a communication module, for example, an interface of a GSM module.

The processor 1 is configured to execute a program.

The memory 3 is configured to store the program, where the program includes a client program.

The program may include program code, and the program code includes a computer operation instruction.

The processor 1 may be a central processing unit CPU, or an application-specific integrated circuit ASIC, or may be one or more integrated circuits configured to implement the embodiments of the present disclosure.

The memory 3 may include a high-speed RAM memory, or may further include a non-volatile memory, such as at least one magnetic disk storages.

The program may be specifically used for:
detecting a first system accumulation time since a previous speed update of a virtual object, and a second system accumulation time since a previous location update of the virtual object; and
updating a speed of the virtual object when the first system accumulation time reaches a preset speed update time, and updating a location of the virtual object when the second system accumulation time reaches a preset location update time.

The preset speed update time is greater than the preset location update time. The first system accumulation time is recalculated each time after the client updates the speed of the virtual object, and the second system accumulation time is recalculated each time after the client updates the location of the virtual object.

A client according to an embodiment of the present disclosure is described blow, and reference may be made between the following descriptions and content of the foregoing method procedure.

FIG. 27 is a block diagram showing a structure of a server according to an embodiment of the present disclosure. Referring to FIG. 27, the server may include: a second detection module 200 and a second update module 210.

The second detection module 200 is configured to detect a system accumulation time since a previous speed and location update of a virtual object.

The second update module 210 is configured to update a speed and a location of the virtual object when it is detected that the system accumulation time reaches a preset update time, where the system accumulation time is recalculated each time after the server updates the speed and the location of the virtual object.

In an implementation, the second detection module 200 is configured to detect the system accumulation time at an interval of n ticks since the previous speed and location update of the virtual object, where n is an integer not less than 1.

In an implementation, the server is further configured to: receive a movement control operation request carrying a movement control parameter sent by a client, update the speed and the location of the virtual object according to the movement control parameter, generate a movement update synchronization packet, and send the movement update synchronization packet to the client.

In an implementation, the server is further configured to: when detecting switch of a moving state of the virtual object, update the speed and the location of the virtual object, generate a movement update synchronization packet, and send the movement update synchronization packet to the client.

In an implementation, the server updates the speed and/or the location of the virtual object based on a character controller.

Correspondingly, the server is configured to: when updating the speed or the location of the virtual object based on the character controller, perform linear cast processing on a shape of the virtual object each time when updating the speed or the location of the virtual object, to proactively query a speed or a location of the virtual object in a physical world of a game, and update the speed or the location of the virtual object.

In an implementation, the server is further configured to receive terrain walking layer data of a 3D scenario, physical collision data of a static object in the 3D scenario, and physical collision data of a dynamic object in the 3D scenario that are exported from a scenario editor and that are also received by a client.

In an implementation, the server is further configured to: determine a location difference between an update location of the virtual object reported by the client and a location of the virtual object that is most recently determined by the server, and update the location of the virtual object to the update location reported by the client if the location difference is less than a preset location threshold.

A hardware structure of the server provided in this embodiment of the present disclosure may be shown in FIG. 26. and the server includes: a processor, a communications interface, a memory, and a communications bus.

The processor is configured to execute a program.

The memory is configured to store a program.

The program may be specifically used for:
detecting the system accumulation time since the previous speed and location update of the virtual object; and
updating the speed and the location of the virtual object when it is detected that the system accumulation time reaches the preset update time, where the system accumulation time is recalculated each time after the server updates the speed and the location of the virtual object.

The embodiments in this specification are all described in a progressive manner. Description of each of the embodiments focuses on differences from other embodiments, and the same or similar parts among the embodiments can be referred to each other. The apparatus embodiments are substantially similar to the method embodiments and therefore are only briefly described, and reference may be made to the method embodiments for the associated part.

Persons skilled in the art may further realize that, in combination with the units and algorithm, steps of each example described in the embodiments disclosed in the present disclosure can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. Persons skilled in the art can use different methods to implement the described functions for each particular application, but it should not be considered that the implementation goes beyond the scope of the embodiments of the present disclosure.

The steps of the methods or algorithms described in conjunction with the embodiments of the present disclosure can be implemented with hardware, software modules executed by a processor, or a combination thereof. The software modules may reside in a Random Access Memory (RAM), an internal memory, a Read Only Memory (ROM), an Electrically Programmable ROM, an Electrically-Erasable Programmable ROM, a register, a hard disk, a removable disk drive, CD-ROM, or other types of storage media well known in the technical field.

The above description of the disclosed embodiments enables persons skilled in the art to implement or use the present disclosure. Various modifications to these embodiments are obvious to persons skilled in the art, the general principles defined in the present disclosure may be implemented in other embodiments without departing from the scope of the invention which is defined by the appended claims.

## Claims

1. A method for synchronizing movement of a virtual object performed by a client (10) and a server (20), wherein the method comprises:
detecting, by the client (10), a first system accumulation time since a previous speed update of the virtual object, and a second system accumulation time since a previous location update of the virtual object;
updating, by the client (10), a speed of the virtual object when the first system accumulation time reaches a preset speed update time;
updating, by the client (10), a location of the virtual object when the second system accumulation time reaches a preset location update time, wherein
the preset speed update time is greater than the preset location update time, the first system accumulation time is recalculated each time after the client (10) updates the speed of the virtual object, and the second system accumulation time is recalculated each time after the client (10) updates the location of the virtual object;
detecting, by the server (20), a third system accumulation time since a previous speed and location update of the virtual object; and
updating, by the server (20), a speed and a location of the virtual object when it is detected that the third system accumulation time reaches a preset update time, the third system accumulation time being recalculated each time after the server (20) updates the speed and the location of the virtual object, wherein
the speed of the virtual object is updated by the client (10) and the server (20) at a first, low, frequency, the location of the virtual object is updated by the server (20) at the same first, low, frequency, and the location of the virtual object is updated by the client (10) at a second, high, frequency which is higher than the first, low, frequency.

2. The method for synchronizing movement of a virtual object according to claim 1, wherein the detecting the first system accumulation time since the previous speed update of the virtual object, and the second system accumulation time since the previous location update of the virtual object comprises:
detecting, at an interval of n logic calculation time units, the first system accumulation time since the previous speed update of the virtual object, and the second system accumulation time since the previous location update of the virtual object, wherein n is an integer not less than 1.

3. The method for synchronizing movement of a virtual object according to claim 2, further comprising, by the client:
detecting a movement control operation of a user, and determining a movement control parameter of the virtual object that is indicated by the movement control operation of the user;
updating the location of the virtual object based on a current speed of the virtual object according to the movement control parameter, and sending a movement control operation request carrying the movement control parameter to the server (20);
receiving, after a location and a speed of the virtual object is updated by the server (20) according to the movement control parameter, a movement update synchronization packet sent by the server (20); and
updating the speed of the virtual object according to the movement update synchronization packet.

4. The method for synchronizing movement of a virtual object according to claim 2, further comprising, by the client:
receiving a movement update synchronization packet sent by the server (20);
and
updating the speed and the location of the virtual object according to the movement update synchronization packet.

5. The method for synchronizing movement of a virtual object according to claim 3 or 4, wherein the updating the speed of the virtual object comprises:
determining, according to the movement update synchronization packet that is most recently sent by the server (20), a speed update trend of the virtual object and an acceleration value corresponding to the speed update trend; and
updating the speed of the virtual object according to the speed update trend and the acceleration value.

6. The method for synchronizing movement of a virtual object according to claim 1, wherein the updating the location of the virtual object comprises:
determining a current location orientation and a current speed of the virtual object; and
updating the location of the virtual object based on the current location orientation and current speed.

7. The method for synchronizing movement of a virtual object according to claim 1, wherein the preset speed update time is a preset multiple of the preset location update time, and the preset multiple is a natural number greater than 3.

8. The method for synchronizing movement of a virtual object according to claim 1, further comprising:
determining a response delay between the client (10) and the server (20);
determining that movement of the virtual object is normally synchronized if a preset buffer period is greater than the response delay; and
recalculating, by the client (10), a first system time and a second system time if the preset buffer period is less than the response delay.

9. The method for synchronizing movement of a virtual object according to claim 1, further comprising, by the client:
calculating, when a movement update synchronization packet sent by the server (20) is received, a location difference between a first update location of the virtual object that is locally determined and a second update location of the virtual object that is determined according to the movement update synchronization packet of the server (20); and
linearly moving the virtual object from the first update location to the second update location in a plurality of set frames if the calculated location difference is greater than a preset location difference.

10. The method for synchronizing movement of a virtual object according to claim 1, wherein the detecting the third system accumulation time since the previous speed and location update of the virtual object comprises:
detecting, at an interval of n logic calculation time units, the third system accumulation time since the previous speed and location update of the virtual object, wherein n is an integer not less than 1.

11. The method for synchronizing movement of a virtual object according to claim 1, further comprising, by the server:
receiving a movement control operation request carrying a movement control parameter sent by the client (10), updating the speed and the location of the virtual object according to the movement control parameter, generating a movement update synchronization packet, and sending the movement update synchronization packet to the client (10); or
when it is detected that a moving state of the virtual object switches, updating the speed and the location of the virtual object, generating a movement update synchronization packet, and sending the movement update synchronization packet to the client (10).

12. The method for synchronizing movement of a virtual object according to claim 1, further comprising, by the server:
determining a location difference between an update location of the virtual object that is reported by the client (10) and a location of the virtual object that is most recently determined in the server (20); and
updating the location of the virtual object to the update location reported by the client (10) if the location difference is less than a preset location threshold.

13. A system for synchronizing movement of a virtual object, comprising a client (10) and a server (20), wherein the client (10) comprises:
a first detection module (100), configured to detect a first system accumulation time since a previous speed update of a virtual object, and a second system accumulation time since a previous location update of the virtual object; and
a first update module (110), configured to update a speed of the virtual object when the first system accumulation time reaches a preset speed update time, and update a location of the virtual object when the second system accumulation time reaches a preset location update time, wherein
the preset speed update time is greater than the preset location update time, the first system accumulation time is recalculated each time after the client (10) updates the speed of the virtual object, and the second system accumulation time is recalculated each time after the client (10) updates the location of the virtual object;
wherein the server (20) comprises:
a second detection module (200), configured to detect a third system accumulation time since a previous speed and location update of the virtual object; and
a second update module (210), configured to update a speed and a location of the virtual object when it is detected that the third system accumulation time reaches a preset update time, the third system accumulation time being recalculated each time after the server (20) updates the speed and the location of the virtual object, wherein
the speed of the virtual object is updated by the client (10) and the server (20) at a first, low, frequency, the location of the virtual object is updated by the server (20) at the same first, low, frequency, and the location of the virtual object is updated by the client (10) at a second, high, frequency which is higher than the first, low, frequency.

## Patentansprüche

1. Verfahren zum Synchronisieren der Bewegung eines virtuellen Objekts, das von einem Client (10) und einem Server (20) ausgeführt wird, wobei das Verfahren umfasst:
Erfassen, durch den Client (10), einer ersten Systemakkumulationszeit seit einer vorherigen Geschwindigkeitsaktualisierung des virtuellen Objekts und einer zweiten Systemakkumulationszeit seit einer vorherigen Ortsaktualisierung des virtuellen Objekts;
Aktualisieren, durch den Client (10), einer Geschwindigkeit des virtuellen Objekts, wenn die erste Systemakkumulationszeit eine voreingestellte Geschwindigkeitsaktualisierungszeit erreicht;
Aktualisieren, durch den Client (10), eines Orts des virtuellen Objekts, wenn die zweite Systemakkumulationszeit eine voreingestellte Ortsaktualisierungszeit erreicht, wobei
die voreingestellte Geschwindigkeitsaktualisierungszeit größer ist als die voreingestellte Ortsaktualisierungszeit, die erste Systemakkumulationszeit jedes Mal neu berechnet wird, nachdem der Client (10) die Geschwindigkeit des virtuellen Objekts aktualisiert, und die zweite Systemakkumulationszeit jedes Mal neu berechnet wird, nachdem der Client (10) den Ort des virtuellen Objekts aktualisiert;
Erfassen, durch den Server (20), einer dritten Systemakkumulationszeit seit einer vorherigen Geschwindigkeits- und Ortsaktualisierung des virtuellen Objekts; und
Aktualisieren einer Geschwindigkeit und eines Ortes des virtuellen Objekts durch den Server (20), wenn erfasst wird, dass die dritte Systemakkumulationszeit eine voreingestellte Aktualisierungszeit erreicht, wobei die dritte Systemakkumulationszeit jedes Mal neu berechnet wird, nachdem der Server (20) die Geschwindigkeit und den Ort des virtuellen Objekts aktualisiert, wobei
die Geschwindigkeit des virtuellen Objekts durch den Client (10) und den Server (20) mit einer ersten, niedrigen Frequenz aktualisiert wird, der Ort des virtuellen Objekts durch den Server (20) mit der gleichen ersten, niedrigen Frequenz aktualisiert wird und der Ort des virtuellen Objekts durch den Client (10) mit einer zweiten, hohen Frequenz aktualisiert wird, die höher als die erste, niedrige Frequenz ist.

2. Verfahren zum Synchronisieren der Bewegung eines virtuellen Objekts nach Anspruch 1, wobei das Erfassen der ersten Systemakkumulationszeit seit der vorherigen Geschwindigkeitsaktualisierung des virtuellen Objekts und der zweiten Systemakkumulationszeit seit der vorherigen Ortsaktualisierung des virtuellen Objekts umfasst:
Erfassen, in einem Intervall von n logischen Berechnungszeiteinheiten, der ersten Systemakkumulationszeit seit der vorherigen Geschwindigkeitsaktualisierung des virtuellen Objekts und der zweiten Systemakkumulationszeit seit der vorherigen Ortsaktualisierung des virtuellen Objekts, wobei n eine ganze Zahl nicht kleiner als 1 ist.

3. Verfahren zum Synchronisieren der Bewegung eines virtuellen Objekts nach Anspruch 2, des Weiteren umfassend, durch den Client:
Erfassen einer Bewegungssteuerungsoperation eines Benutzers, und Bestimmen eines Bewegungssteuerungsparameters des virtuellen Objekts, der durch die Bewegungssteuerungsoperation des Benutzers angegeben wird;
Aktualisieren des Orts des virtuellen Objekts basierend auf einer aktuellen Geschwindigkeit des virtuellen Objekts entsprechend dem Bewegungssteuerungsparameter, und Senden einer Bewegungssteuerungsoperationsanforderung, die den Bewegungssteuerungsparameter trägt, an den Server (20);
Empfangen, nachdem ein Ort und eine Geschwindigkeit des virtuellen Objekts durch den Server (20) entsprechend dem Bewegungssteuerungsparameter aktualisiert wird, eines von dem Server (20) gesendeten Bewegungsaktualisierungssynchronisationspakets; und
Aktualisieren der Geschwindigkeit des virtuellen Objekts entsprechend dem Bewegungsaktualisierungssynchronisationspaket.

4. Verfahren zum Synchronisieren der Bewegung eines virtuellen Objekts nach Anspruch 2, des Weiteren umfassend, durch den Client:
Empfangen eines von dem Server (20) gesendeten Bewegungsaktualisierungssynchronisationspakets; und
Aktualisieren der Geschwindigkeit und des Orts des virtuellen Objekts entsprechend dem Bewegungsaktualisierungssynchronisationspaket.

5. Verfahren zum Synchronisieren der Bewegung eines virtuellen Objekts nach Anspruch 3 oder 4, wobei das Aktualisieren der Geschwindigkeit des virtuellen Objekts umfasst:
Bestimmen, entsprechend dem Bewegungsaktualisierungssynchronisationspaket, das zuletzt von dem Server (20) gesendet wird, eines Geschwindigkeitsaktualisierungstrends des virtuellen Objekts und eines Beschleunigungswerts, der dem Geschwindigkeitsaktualisierungstrend entspricht; und
Aktualisieren der Geschwindigkeit des virtuellen Objekts entsprechend dem Geschwindigkeitsaktualisierungstrend und dem Beschleunigungswert.

6. Verfahren zum Synchronisieren der Bewegung eines virtuellen Objekts nach Anspruch 1, wobei das Aktualisieren des Orts des virtuellen Objekts umfasst:
Bestimmen einer aktuellen Ortsorientierung und einer aktuellen Geschwindigkeit des virtuellen Objekts; und
Aktualisieren des Orts des virtuellen Objekts basierend auf der aktuellen Ortsorientierung und der aktuellen Geschwindigkeit.

7. Verfahren zum Synchronisieren der Bewegung eines virtuellen Objekts nach Anspruch 1, wobei die voreingestellte Geschwindigkeitsaktualisierungszeit ein voreingestelltes Vielfaches der voreingestellten Ortsaktualisierungszeit ist und das voreingestellte Vielfache eine natürliche Zahl größer als 3 ist.

8. Verfahren zum Synchronisieren der Bewegung eines virtuellen Objekts nach Anspruch 1, des Weiteren umfassend:
Bestimmung einer Antwortverzögerung zwischen dem Client (10) und dem Server (20);
Bestimmen, dass die Bewegung des virtuellen Objekts normal synchronisiert ist, falls eine voreingestellte Pufferperiode größer ist als die Antwortverzögerung; und
Neuberechnen, durch den Client (10), einer ersten Systemzeit und einer zweiten Systemzeit, wenn die voreingestellte Pufferperiode kleiner ist als die Antwortverzögerung.

9. Verfahren zum Synchronisieren der Bewegung eines virtuellen Objekts nach Anspruch 1, des Weiteren umfassend, durch den Client:
Berechnen, wenn ein von dem Server (20) gesendetes Bewegungsaktualisierungspaket empfangen wird, einer Ortsdifferenz zwischen einem ersten Aktualisierungsort des virtuellen Objekts, der lokal bestimmt wird, und einem zweiten Aktualisierungsort des virtuellen Objekts, der entsprechend dem Bewegungsaktualisierungssynchronisationspaket des Servers (20) bestimmt wird; und
lineares Bewegen des virtuellen Objekts von dem ersten Aktualisierungsort zu dem zweiten Aktualisierungsort in einer Vielzahl von eingestellten Rahmen, falls die berechnete Ortsdifferenz größer als eine voreingestellte Ortsdifferenz ist.

10. Verfahren zum Synchronisieren der Bewegung eines virtuellen Objekts nach Anspruch 1, wobei das Erfassen der dritten Systemakkumulationszeit seit der vorherigen Geschwindigkeits- und Ortsaktualisierung des virtuellen Objekts umfasst:
Erfassen, in einem Intervall von n logischen Berechnungszeiteinheiten, der dritten Systemakkumulationszeit seit der vorherigen Geschwindigkeits- und Ortsaktualisierung des virtuellen Objekts, wobei n eine ganze Zahl nicht kleiner als 1 ist.

11. Verfahren zum Synchronisieren der Bewegung eines virtuellen Objekts nach Anspruch 1, des Weiteren umfassend, durch den Server:
Empfangen einer Bewegungssteuerungsoperationsanforderung, die einen von dem Client (10) gesendeten Bewegungssteuerungsparameter trägt, Aktualisieren der Geschwindigkeit und des Orts des virtuellen Objekts entsprechend dem Bewegungssteuerungsparameter, Erzeugen eines Bewegungsaktualisierungssynchronisationspakets und Senden des Bewegungsaktualisierungssynchronisationspakets an den Client (10); oder
wenn erfasst wird, dass ein Bewegungszustand des virtuellen Objekts wechselt, Aktualisieren der Geschwindigkeit und des Orts des virtuellen Objekts, Erzeugen eines Bewegungsaktualisierungssynchronisationspakets und Senden des Bewegungsaktualisierungssynchronisationspakets an den Client (10).

12. Verfahren zum Synchronisieren der Bewegung eines virtuellen Objekts nach Anspruch 1, des Weiteren umfassend, durch den Server:
Bestimmen einer Ortsdifferenz zwischen einem Aktualisierungsort des virtuellen Objekts, der von dem Client (10) gemeldet wird, und einem Ort des virtuellen Objekts, der zuletzt in dem Server (20) bestimmt wird; und
Aktualisieren des Orts des virtuellen Objekts auf den von dem Client (10) gemeldeten Aktualisierungsort, falls die Ortsdifferenz kleiner als ein voreingestellter Ortsschwellenwert ist.

13. System zum Synchronisieren der Bewegung eines virtuellen Objekts, das einen Client (10) und einen Server (20) umfasst, wobei der Client (10) umfasst:
ein erstes Erfassungsmodul (100), das so konfiguriert ist, dass es eine erste Systemakkumulationszeit seit einer vorherigen Geschwindigkeitsaktualisierung eines virtuellen Objekts und eine zweite Systemakkumulationszeit seit einer vorherigen Ortsaktualisierung des virtuellen Objekts erfasst; und
ein erstes Aktualisierungsmodul (110), das so konfiguriert ist, dass es eine Geschwindigkeit des virtuellen Objekts aktualisiert, wenn die erste Systemakkumulationszeit eine voreingestellte Geschwindigkeitsaktualisierungszeit erreicht, und einen Ort des virtuellen Objekts aktualisiert, wenn die zweite Systemakkumulationszeit eine voreingestellte Ortsaktualisierungszeit erreicht, wobei
die voreingestellte Geschwindigkeitsaktualisierungszeit größer ist als die voreingestellte Ortsaktualisierungszeit, die erste Systemakkumulationszeit jedes Mal neu berechnet wird, nachdem der Client (10) die Geschwindigkeit des virtuellen Objekts aktualisiert, und die zweite Systemakkumulationszeit jedes Mal neu berechnet wird, nachdem der Client (10) den Ort des virtuellen Objekts aktualisiert;
wobei der Server (20) umfasst:
ein zweites Erfassungsmodul (200), das so konfiguriert ist, dass es eine dritte Systemakkumulationszeit seit einer vorherigen Geschwindigkeits- und Ortsaktualisierung des virtuellen Objekts erfasst; und
ein zweites Aktualisierungsmodul (210), das so konfiguriert ist, dass es eine Geschwindigkeit und einen Ort des virtuellen Objekts aktualisiert, wenn erfasst wird, dass die dritte Systemakkumulationszeit eine voreingestellte Aktualisierungszeit erreicht, wobei die dritte Systemakkumulationszeit jedes Mal neu berechnet wird, nachdem der Server (20) die Geschwindigkeit und den Ort des virtuellen Objekts aktualisiert,
wobei die Geschwindigkeit des virtuellen Objekts durch den Client (10) und den Server (20) mit einer ersten, niedrigen Frequenz aktualisiert wird, der Ort des virtuellen Objekts durch den Server (20) mit der gleichen ersten, niedrigen Frequenz aktualisiert wird und der Ort des virtuellen Objekts durch den Client (10) mit einer zweiten, hohen Frequenz aktualisiert wird, die höher ist als die erste, niedrige Frequenz.

## Revendications

1. Procédé de synchronisation du mouvement d'un objet virtuel qui est mis en œuvre par un client (10) et un serveur (20), dans lequel le procédé comprend:
détecter, par le client (10), un premier temps d'accumulation de système depuis une mise à jour de vitesse précédente de l'objet virtuel, et un deuxième temps d'accumulation de système depuis une mise à jour d'emplacement précédente de l'objet virtuel;
mettre à jour, par le client (10), une vitesse de l'objet virtuel lorsque le premier temps d'accumulation de système atteint un temps de mise à jour de vitesse prédéfini;
mettre à jour, par le client (10), un emplacement de l'objet virtuel lorsque le deuxième temps d'accumulation de système atteint un temps de mise à jour d'emplacement prédéfini, dans lequel
le temps de mise à jour de vitesse prédéfini est supérieur au temps de mise à jour d'emplacement prédéfini, le premier temps d'accumulation de système est recalculé à chaque fois après que le client (10) met à jour la vitesse de l'objet virtuel, et le deuxième temps d'accumulation de système est recalculé à chaque fois après que le client (10) met à jour l'emplacement de l'objet virtuel;
détecter, par le serveur (20), un troisième temps d'accumulation de système depuis une mise à jour de vitesse et d'emplacement précédente de l'objet virtuel; et
mettre à jour, par le serveur (20), une vitesse et un emplacement de l'objet virtuel lorsqu'il est détecté que le troisième temps d'accumulation de système atteint un temps de mise à jour prédéfini, le troisième temps d'accumulation de système étant recalculé à chaque fois après la mise à jour, par le serveur (20), de la vitesse et de l'emplacement de l'objet virtuel, dans lequel
la vitesse de l'objet virtuel est mise à jour par le client (10) et le serveur (20) à une première basse fréquence, l'emplacement de l'objet virtuel est mis à jour par le serveur (20) à la même première basse fréquence, et l'emplacement de l'objet virtuel est mis à jour par le client (10) à une deuxième haute fréquence qui est supérieure à la première basse fréquence.

2. Procédé de synchronisation du mouvement d'un objet virtuel selon la revendication 1, dans lequel la détection du premier temps d'accumulation de système depuis la mise à jour de vitesse précédente de l'objet virtuel, et du deuxième temps d'accumulation de système depuis la mise à jour d'emplacement précédente de l'objet virtuel comprend:
détecter, à un intervalle de n unités de temps de calcul logiques, le premier système d'accumulation de système depuis la mise à jour de vitesse précédente de l'objet virtuel, et le deuxième temps d'accumulation de système depuis la mise à jour d'emplacement précédente de l'objet virtuel, dans lequel n est un entier pas moins de 1.

3. Procédé de synchronisation du mouvement d'un objet virtuel selon la revendication 2, comprenant en outre, par le client:
détecter une opération de commande de mouvement d'un utilisateur et déterminer un paramètre de commande de mouvement de l'objet virtuel qui est indiqué par l'opération de commande de mouvement de l'utilisateur;
mettre à jour l'emplacement de l'objet virtuel sur la base d'une vitesse actuelle de l'objet virtuel en fonction du paramètre de commande de mouvement, et envoyer au serveur (20) une demande d'opération de commande de mouvement portant le paramètre de commande de mouvement;
recevoir, après qu'un emplacement et une vitesse de l'objet virtuel est mis(e) à jour par le serveur (20) en fonction du paramètre de commande de mouvement, un paquet de synchronisation de mise à jour de mouvement envoyé par le serveur (20); et
mettre à jour la vitesse de l'objet virtuel en fonction du paquet de synchronisation de mise à jour de mouvement.

4. Procédé de synchronisation du mouvement d'un objet virtuel selon la revendication 2, comprenant en outre, par le client:
recevoir un paquet de synchronisation de mise à jour de mouvement envoyé par le serveur (20); et
mettre à jour la vitesse et l'emplacement de l'objet virtuel en fonction du paquet de synchronisation de mise à jour de mouvement.

5. Procédé de synchronisation du mouvement d'un objet virtuel selon la revendication 3 ou 4, dans lequel la mise à jour de la vitesse de l'objet virtuel comprend:
déterminer, en fonction du paquet de synchronisation de mise à jour de mouvement qui est récemment envoyé par le serveur (20), une tendance de mise à jour de vitesse de l'objet virtuel et une valeur d'accélération correspondant à la tendance de mise à jour de vitesse; et
mettre à jour la vitesse de l'objet virtuel en fonction de la tendance de mise à jour de vitesse et de la valeur d'accélération.

6. Procédé de synchronisation du mouvement d'un objet virtuel selon la revendication 1, dans lequel la mise à jour de l'emplacement de l'objet virtuel comprend:
déterminer une orientation d'emplacement actuelle et une vitesse actuelle de l'objet virtuel; et
mettre à jour l'emplacement de l'objet virtuel sur la base de l'orientation d'emplacement actuelle et de la vitesse actuelle.

7. Procédé de synchronisation du mouvement d'un objet virtuel selon la revendication 1, dans lequel le temps de mise à jour de vitesse prédéfini est un multiple prédéfini du temps de mise à jour d'emplacement prédéfini et le multiple prédéfini est un nombre naturel supérieur à 3.

8. Procédé de synchronisation du mouvement d'un objet virtuel selon la revendication 1, comprenant en outre:
déterminer un retard de réponse entre le client (10) et le serveur (20);
déterminer que le mouvement de l'objet virtuel est normalement synchronisé si une période de tampon prédéfinie est supérieure au retard de réponse; et
recalculer, par le client (10), un premier temps de système et un deuxième temps de système si la période de tampon prédéfinie est inférieure au retard de réponse.

9. Procédé de synchronisation du mouvement d'un objet virtuel selon la revendication 1, comprenant en outre, par le client:
calculer, lorsqu'un paquet de synchronisation de mise à jour de mouvement envoyé par le serveur (20) est reçu, une différence d'emplacement entre un premier emplacement de mise à jour de l'objet virtuel qui est déterminé localement et un deuxième emplacement de mise à jour de l'objet virtuel qui est déterminé en fonction du paquet de synchronisation de mise à jour de mouvement du serveur (20); et
déplacer linéairement l'objet virtuel du premier emplacement de mise à jour au deuxième emplacement de mise à jour dans une pluralité de cadres définis si la différence d'emplacement calculée est supérieure à une différence d'emplacement prédéfinie.

10. Procédé de synchronisation du mouvement d'un objet virtuel selon la revendication 1, dans lequel la détection du troisième temps d'accumulation de système depuis la mise à jour de vitesse et d'emplacement précédente de l'objet virtuel comprend:
détecter, à un intervalle de n unités de temps de calcul logiques, le troisième temps d'accumulation de système depuis la mise à jour de vitesse et d'emplacement précédente de l'objet virtuel, dans lequel n est un entier pas moins de 1.

11. Procédé de synchronisation du mouvement d'un objet virtuel selon la revendication 1, comprenant en outre, par le serveur:
recevoir une demande d'opération de commande de mouvement portant un paramètre de commande de mouvement envoyé par le client (10), mettre à jour la vitesse et l'emplacement de l'objet virtuel en fonction du paramètre de commande de mouvement, générer un paquet de synchronisation de mise à jour de mouvement et envoyer au client (10) le paquet de synchronisation de mise à jour de mouvement; ou
lorsqu'il est détecté qu'un état de déplacement de l'objet virtuel change, mettre à jour la vitesse et l'emplacement de l'objet virtuel, générer un paquet de synchronisation de mise à jour de mouvement et envoyer au client (10) le paquet de synchronisation de mise à jour de mouvement.

12. Procédé de synchronisation du mouvement d'un objet virtuel selon la revendication 1, comprenant en outre, par le serveur:
déterminer une différence d'emplacement entre un emplacement de mise à jour de l'objet virtuel qui est rapporté par le client (10) et un emplacement de l'objet virtuel qui est récemment déterminé dans le serveur (20); et
mettre à jour l'emplacement de l'objet virtuel à l'emplacement de mise à jour rapporté par le client (10) si la différence d'emplacement est inférieure à une valeur de seuil d'emplacement prédéfinie.

13. Système de synchronisation du mouvement d'un objet virtuel, comprenant un client (10) et un serveur (20), dans lequel le client (10) comprend:
un premier module de détection (100) qui est configuré pour détecter un premier temps d'accumulation de système depuis une mise à jour de vitesse précédente d'un objet virtuel, et un deuxième temps d'accumulation de système depuis une mise à jour d'emplacement précédente de l'objet virtuel; et
un premier module de mise à jour (110) qui est configuré pour mettre à jour une vitesse de l'objet virtuel lorsque le premier temps d'accumulation de système atteint un temps de mise à jour de vitesse prédéfini, et pour mettre à jour un emplacement de l'objet virtuel lorsque le deuxième temps d'accumulation de système atteint un temps de mise à jour d'emplacement prédéfini, dans lequel
le temps de mise à jour de vitesse prédéfini est supérieur au temps de mise à jour d'emplacement prédéfini, le premier temps d'accumulation de système est recalculé à chaque fois après que le client (10) met à jour la vitesse de l'objet virtuel, et le deuxième temps d'accumulation de système est recalculé à chaque fois après la mise à jour, par le client (10), de l'emplacement de l'objet virtuel;
dans lequel le serveur (20) comprend:
un deuxième module de détection (200) qui est configuré pour détecter un troisième temps d'accumulation de système depuis une mise à jour de vitesse et d'emplacement précédente de l'objet virtuel; et
un deuxième module de mise à jour (210) qui est configuré pour mettre à jour une vitesse et un emplacement de l'objet virtuel lorsqu'il est détecté que le troisième temps d'accumulation de système atteint un temps de mise à jour prédéfini, le troisième temps d'accumulation de système étant recalculé à chaque fois après la mise à jour, par le serveur (20), de la vitesse et de l'emplacement de l'objet virtuel,
dans lequel la vitesse de l'objet virtuel est mise à jour par le client (10) et le serveur (20) à une première basse fréquence, l'emplacement de l'objet virtuel est mis à jour par le serveur (20) à la même première basse fréquence, et l'emplacement de l'objet virtuel est mis à jour par le client (10) à une deuxième haute fréquence qui est supérieure à la première basse fréquence.
